# EUROPEAN PATENT APPLICATION

(11) **EP 2 799 135 A1**
(43) Date of publication of application: **05.11.2014**
(21) Application number: 11878965.0
(22) Date of filing: 28.12.2011
(51) Int. Cl.: B01J 35/02, B01J 27/18

(54) **PHOTOCATALYSTS AND PROCESS FOR PREPARING PHOTOCATALYSTS**

(71) Applicant: Fujitsu Limited, Kawasaki-shi, Kanagawa 211-8588 (JP)
(72) Inventor: TSUKADA, Mineharu, Kawasaki-shi Kanagawa 211-8588 (JP); WAKAMURA, Masato, Kawasaki-shi Kanagawa 211-8588 (JP); ANAZAWA, Toshihisa, Kawasaki-shi Kanagawa 211-8588 (JP)
(74) Representative: Lewin, David Nicholas
(86) International application number: PCT/JP2011/080449
(87) International publication number: WO 2013/099006

(57) **Abstract**

A photocatalyst, which includes X·titanium hydroxyapatite doped with silver, where the X is an alkaline earth metal having an atomic number equal to or higher than that of calcium. A photocatalyst, which includes calcium·titanium hydroxyapatite, in which at least part of the calcium is substituted with an alkaline earth metal having an atomic number equal to or higher than that of strontium.

## Description

### Technical Field

The embodiment discussed herein relates to a photocatalyst, and a method for producing a photocatalyst.

### Background Art

Recently, photocatalytic activities of some of semiconductor materials, such as titanium dioxide (TiO₂), which exhibit an oxidative decomposition function, an antibacterial action, and an antifouling function, have been attracted attentions. In the semiconductor material having photocatalytic activities, typically, electrons present on the valence band are excited to the conduction band, once light having the energy corresponding to a band gap between the valence band to the conduction band is absorbed. The electrons excited to the conduction band have characteristics that they move to a material adsorbed on a surface of the semiconductor material having the photocatalyst. In the case where a material is adsorbed on a surface of the semiconductor material, therefore, the material is reduced with the electrons. When electrons presented on the valence band are excited onto the conduction band, on the other hand, holes are generated on the valence band. The holes generated on the valence band have characteristics that the holes take electrons out from a material adsorbed onto a surface of the semiconductor material having photocatalytic activities. In the case where a material is adsorbed on a surface of the semiconductor material, therefore, the holes take electrons out of the material to thereby oxidize the material.

The aforementioned phenomenon is specifically explained. Taking oxide titanium having particularly excellent photocatalytic activities as an example, electrons present on a valence band of the titanium dioxide are excited to a conduction band thereof, once titanium dioxide absorbs light having energy corresponding to a band gap of the titanium dioxide between the valence band and the conduction band. The excited electrons reduce oxide in the air to generate super oxide anion (·O₂⁻), Meanwhile, holes are generated on the valence band as a result of the sift of the electrons, and the generated holes oxidize water adsorbed on a surface of the titanium dioxide to thereby generate hydroxyl radicals (·OH). Since the hydroxyl radicals have extremely strong oxidizability, in the case where organic matter is adsorbed on the surface of the titanium dioxide, the organic matter is decomposed by the function of the hydroxyl radicals. Ultimately, the organic matter is decomposed down to water and carbon dioxide. When light having energy corresponding to a band gap of a semiconductor material between a valence band thereof and a conduction band thereof is applied to the semiconductor material having photocatalytic activities, such as titanium dioxide, as mentioned above, the semiconductor material absorbs the light, and organic matter adsorbed on a surface of the semiconductor material is decomposed. As a result, an oxidative decomposition function, antibacterial action, and an antifouling function are exhibited.

Therefore, the semiconductor material having photocatalytic activities, including especially titanium dioxide, has been recently widely used, as an antibacterial agent, sterilizer, antifouling agent, deodorant, or environmental cleaning agent. For example, disclosed is to provide antibacterial activities to a press bottom of electronic equipment with adhering photocatalytic titanium dioxide onto the press bottom (see PTL 1). Moreover, disclosed are a photocatalyst thin film containing particles having photocatalytic action, which is formed of a metal element that has an electronegativity smaller than 1.6, is an element having an ion radius smaller than 0.2 nm, and has an atomic value of 2 or smaller, and a product having the photocatalyst thin film on a surface of a base (see PTL 2).

However, those disclosed above have the following problems. Light energy necessary to cause excitation of titanium dioxide having excellent photocatalytic activities is 3.2 eV to 3.3 eV. As this light energy is converted into a wavelength of light, the wavelength is about 380 nm. This means that the titanium dioxide cause excitation when near ultraviolet rays are applied, but the titanium dioxide does not cause excitation when visible light (wavelength: 400 nm to 800 nm) is applied. A proportion of ultraviolet rays in sun light is small, i.e., just 4% to 5%. In the case where sun light is used as irradiation light, therefore, there is a problem that the titanium dioxide does not exhibit sufficient photocatalytic activities. In the case where light emitted from an indoor florescent lamp, in which ultraviolet rays barely exist, is applied, moreover, there is a problem that the titanium dioxide hardly exhibits photocatalytic activities.

Strongly desired is a development of titanium dioxide, which can solve the aforementioned problem that sufficient photocatalytic activities cannot be provided to a product used under sun light or an indoor fluorescent lamp, and which can exhibit sufficient photocatalytic activities when visible light occupying 45% of sun light, and majority of light emitted from a fluorescent lamp is applied. Therefore, researches associated with response of the titanium dioxide to visible light have been widely conducted.

As one example of the aforementioned researches, proposed are, for the purpose of providing visible light responsibility to the titanium dioxide, a method where oxygen defects are formed in the titanium dioxide, and a method where the titanium dioxide is doped with nitrogen. In these cases, however, practically satisfactory results are not attained, and it is a current situation that they have remained within a research level.

Meanwhile, the titanium dioxide has poor adsorption ability to a material. Therefore, it is desired to improve the adsorption ability of the titanium dioxide against a decomposition target, in order to exhibit an oxidative decomposition function, an antibacterial action, and an antifouling function based on the photocatalytic activities of the titanium dioxide.

As for a material having an excellent adsorption ability to a decomposition target, therefore, researches and developments of technologies using properties of apatite, such as calcium hydroxyapatite have been conducted, because apatite, such as calcium hydroxyapatite Ca₁₀(PO₄)₆(OH)₂, which is a main component of bio hard tissue, such as teeth, and bone, facilitates ion exchange with various cations and anions, has high biocompatibility and adsorption ability, and has a significant adsorption ability to organic matter, such as protein.

As for one example of the aforementioned researches and developments, disclosed is a product, in which a semiconductor material, such as titanium dioxide, and a calcium phosphate-based compound, such as calcium hydroxyapatite, are combined to thereby effectively bring out characteristics of the both materials (see PTLs 3 and 4). Moreover, disclosed is calcium-titanium hydroxyapatite Ca₉₍₈₎Ti(PO₄)₆(OH)₂ having a photocatalytic function, so-called photocatalyst titanium hydroxyapatite (Ti-CaHAP), which is formed by exchanging part of calcium ions in the apatite with titanium ions (see PTLs 5 to 8).

Even in the aforementioned photocatalyst titanium hydroxyapatite (Ti-CaHAP), however, there is the aforementioned problem that the titanium dioxide hardly exhibits photocatalytic activities when light emitted from an indoor fluorescent lamp, in which ultraviolet rays barely exist, is applied.

Therefore, disclosed as a photocatalyst, which exhibits excellent absorbance to ultraviolet rays and visible light, exhibits photocatalytic activities to light of a wide wavelength range over a long period, has excellent an adsorption ability to a decomposition target, and can exhibit an oxidative decomposition function, an antibacterial action, and an antifouling function, is a Ti-CaHAP photocatalyst, in which chromium (Cr) and/or nickel (Ni), and tungsten (W) and/or vanadium (V) are introduced by doping (see PTL 9).

However, the disclosed photocatalyst contains an element that would be harmful to the environment, such as chromium (Cr), and has a problem on practical use.

Note that, in the literature above, as a metal atom constituting apatite, possible use of a metal atom, such as aluminum (Al), or lanthanum (La) is mentioned, other than calcium (Ca). As for a metal atom that can function as a center of a photocatalyst, possible use of zinc (Zn) is mentioned, other than titanium titanium (Ti). Moreover, chromium (Cr), and nickel (Ni) are disclosed as a visible light absorbing metal atom used for doping, and only chromium (Cr), and nickel (Ni) are mentioned as a metal atom to be introduced into titanium hydroxyapatite (Ti-CaHAP) by doping for providing the photocatalyst with photocatalytic activities to light of a wide wavelength range, especially light including visible light. Possible use of other metal atoms has not been studied or suggested at all.

Accordingly, there are currently needs for a high performance photocatalyst, which does not contain a metal atom that is harmful to the environment, and has excellent photocatalytic activities, and a method for producing the photocatalyst.

### Citation List

### Patent Literature

PTL 1: Japanese Latent Application Laid-Open (JP-A) No. 11-195345
PTL 2: JP-A No. 2003-305371
PTL 3: JP-A No. 2003-80078
PTL 4: JP-A No. 2003-321313
PTL 5: JP-A No. 2000-327315
PTL 6: JP-A No. 2001-302220
PTL 7: JP-A No. 2003-175338
PTL 8: JP-A No. 2003-334883
PTL 9: Japanese Patent (JP-B) No. 4295231

### Summary of Invention

### Technical Problem

The aim herein is to provide a high performance photocatalyst, which does not contain a metal atom that is harmful to the environment, and has excellent photocatalytic activities, and a method for producing the photocatalyst.

### Solution to Problem

The disclosed photocatalyst contains X·titanium hydroxyapatite doped with silver, where the X is an alkaline earth metal having an atomic number equal to or higher than that of calcium.

The disclosed photocatalyst contains calcium-titanium hydroxyapatite, in which at least part of the calcium is substituted with an alkaline earth metal having an atomic number equal to or higher than that of strontium.

The disclosed method for producing a photocatalyst contains carrying out a coprecipitation method to produce the disclosed photocatalyst.

### Advantageous Effects of Invention

The disclosed photocatalyst provides a high performance photocatalyst, which does not contain a metal atom that is harmful to the environment, and has excellent photocatalytic activities.

The disclosed method for producing a photocatalyst can produce a high performance photocatalyst, which does not contain a metal atom that is harmful to the environment, and has excellent photocatalytic activities.

### Brief Description of Drawings

FIG. 1 is a diagram depicting a band structure of calcium hydroxyapatite (Ca₁₀(PO₄)₆(OH)₂).
FIG. 2 is a diagram depicting a band structure of calcium-titanium hydroxyapatite (TiCa₈(PO₄)₆(OH)₂).
FIG. 3A is a diagram depicting one example of a structure of TiAg-CaHAP (Ca₇TiAg₂(PO₄)₆(OH)₂).
FIG. 3B is a diagram depicting one example of a band structure of TiAg-CaHAP (Ca₇TiAg₂(PO₄)₆(OH)₂) depicted in FIG. 3A.
FIG. 4A is a diagram depicting one example of a structure of TiAg-CaHAP (Ca₇TiAg₂(PO₄)₆(OH)₂).
FIG. 4B is a diagram depicting one example of a band structure of TiAg-CaHAP (Ca₇TiAg₂(PO₄)₆(OH)₂) depicted in FIG. 4A.
FIG. 5A is a diagram depicting one example of a structure of TiAg-CaHAP (Ca₇TiAg₂(PO₄)₆(OH)₂).
FIG. 5B is a diagram depicting one example of a band structure of TiAg-CaHAP (Ca₇TiAg₂(PO₄)₆(OH)₂) depicted in FIG. 5A.
FIG. 6A is a diagram depicting one example of a structure of TiAg-CaHAP (Ca₇TiAg₂(PO₄)₆(OH)₂).
FIG. 6B is a diagram depicting one example of a band structure of TiAg-CaHAP (Ca₇TiAg₂(PO₄)₆(OH)₂) depicted in FIG. 6A.
FIG. 7A is a diagram depicting one example of a structure of TiAg-CaHAP (Ca₇TiAg₂(PO₄)₆(OH)₂).
FIG. 7B is a diagram depicting one example of a band structure of TiAg-CaHAP (Ca₇TiAg₂(PO₄)₆(OH)₂) depicted in FIG. 7A.
FIG. 8A is a diagram depicting one example of a structure of TiAg-CaHAP (Ca₇TiAg₂(PO₄)₆(OH)₂).
FIG. 8B is a diagram depicting one example of a band structure of TiAg-CaHAP(Ca₇TiAg₂(PO₄)₆(OH)₂) depicted in FIG. 8A.
FIG. 9 is a diagram depicting one example of a structure of TiAg-SrHAP (TiAg₂Sr₇(PO₄)₆(OH)₂).
FIG. 10 is a diagram depicting one example of a band structure of TiAg-SrHAP (TiAg₂Sr₇(PO₄)₆(OH)₂).
FIG. 11 is a diagram depicting one example of a structure of TiSr₉₍₈₎(PO₄)₆(OH)₂.
FIG. 12 is one example of a synthesis scheme for producing Ag-doped calcium·titanium hydroxyapatite, which is the disclosed photocatalyst, through a coprecipitation method.
FIG. 13 is a diagram depicting diffuse reflectance spectra of Samples 1 to 6 obtained in Examples 1 to 4 and Comparative Examples 1 to 2, photocatalyst titanium dioxide, and calcium hydroxyapatite.
FIG. 14 is a spectrum diagram of a xenon lamp from which UV rays has been cut, used in the measurement for photocatalytic activities.
FIG. 15 is a diagram depicting a change in absorbance of a methylene blue aqueous solution with time, when the sample of Example 1 is evaluated in term of decomposition of methylene blue.
FIG. 16 is a diagram depicting a change in absorbance of a methylene blue aqueous solution with time when the sample of Example 1, the sample of Comparative Example 1, and a blank sample are evaluated in terms of decomposition of methylene blue.
FIG. 17 is a diagram depicting a change in a CO₂ gas concentration with time in the test of acetaldehyde gas decomposition with a photocatalyst performed upon application of light from which UV rays have been cut.
FIG. 18 is one example of a synthesis scheme for producing Ag-doped strontium·titanium hydroxyapatite, which is the disclosed photocatalyst, through a coprecipitation method.
FIG. 19 is a diagram depicting diffuse reflectance spectra of Samples 7 to 11 obtained in Examples 5 to 9, and calcium hydroxyapatite.
FIG. 20 is a diagram depicting a change in absorbance of a methylene blue aqueous solution with time when the sample of Example 5 is evaluated in terms of decomposition of methylene blue.
FIG. 21 is a diagram depicting a change in absorbance of a methylene blue aqueous solution with time when the sample of Example 5, the sample of Example 9, and a blank sample are evaluated in terms of decomposition of methylene blue.
FIG. 22 is a diagram depicting a change in a CO₂ gas concentration with time in the test of acetaldehyde gas decomposition with a photocatalyst performed upon application of light from which UV rays have been cut.
FIG. 23 depicts XRD spectra of the sample of Example 9 and the sample of Comparative Example 1.
FIG. 24 is a diagram depicting a change in a CO₂ gas concentration with time in the test of acetaldehyde gas decomposition with a photocatalyst performed upon application of light from which UV rays have not been cut.

### Description of Embodiments

### (Photocatalyst)

The disclosed photocatalyst (first photocatalyst) contains X·titanium hydroxyapatite (note that, the X is an alkaline earth metal having an atomic number equal to or greater than that of calcium) doped with silver, and may further contain other components according to the necessity.

In other words, the photocatalyst is a compound, in which at least part of metal atoms constituting X·titanium hydroxyapatite is substituted with silver.

In other words, furthermore, the photocatalyst is a compound, in which at least part of metal atoms constituting calcium·titanium hydroxyapatite, or a compound obtained by substituting calcium of calcium-titanium hydroxyapatite with an alkaline earth metal having an atomic number equal to or greater than that of strontium, or both thereof is substituted with silver.

The photocatalyst (first photocatalyst) has a narrowed band gap due to doping of silver (substitution with silver), and therefore the photocatalyst is a photocatalyst having a responsibility to visible light, which can be used with light of a wide wavelength range.

Moreover, the disclosed photocatalyst (second photocatalyst) contains calcium·titanium hydroxyapatite at least part of calcium of which is substituted with an alkaline earth metal having an atomic number equal to or greater than that of strontium, and may further contain other components according to the necessity.

In order to improve photocatalytic activity of calcium-titanium hydroxyapatite (Ti-CaHAP), conventionally, a heat treatment has been carried out at 600°C or higher. As the heat treatment is performed, however, crystallinity is improved and at the same time, photocatalytic activities are improved, but coarse particles are generated due to sintering between particles. Formation of coarse particles makes difficult to add a resulting photocatalyst to fibers or the like, and therefore use of such photocatalyst is limited.

The photocatalyst (second photocatalyst) has high crystallinity without performing a high temperature heat treatment (e.g., at 600°C), which may cause formation of coarse particles, and can attain high photocatalytic activities.

### <First Photocatalyst>

The first photocatalyst contains X·titanium hydroxyapatite (note that, the X is an alkaline earth metal having an atomic number equal to or grater than that of calcium) doped with silver, and may further contain other components according to the necessity.

The first photocatalyst may be referred to as TiAg-XHAP (note that, the X is an alkaline earth metal having an atomic number equal to or greater than that of calcium), hereinafter.

Examples of the first photocatalyst include a compound represented by the following general formula (1).

XₐTi_{b}Ag_{c}(PO₄)₆(OH)₂ General Formula (1)

In the general formula (1), X is an alkaline earth metal having an atomic number equal to or greater than that of calcium; a is 0.1 to 9.5; b is 0.1 to 5.0; c is 0.1 to 5.0; and a+b+c is 9.0 to 10.0.

The "a" is preferably 2.0 to 9.5, more preferably 3.0 to 9.0, even more preferably 5.0 to 9.0, and particularly preferably 6.0 to 8.0.

The "b" is preferably 0.1 to 4.0, more preferably 0.3 to 3.0, even more preferably 0.5 to 2.0, and particularly preferably 0.7 to 1.5.

The "c" is preferably 0.1 to 5.0, more preferably 0.3 to 4.0, even more preferably 0.5 to 3.5, and particularly preferably 1.0 to 3.0.

The first photocatalyst can be produced, for example, by a coprecipitation method.

Specifically, the production method of the first photocatalyst is appropriately selected depending on the intended purpose without any limitation, provided that a resulting first photocatalyst is a compound having a structure where the X·titanium hydroxyapatite is doped with silver. As in a coprecipitation method in the below-mentioned method for producing the first photocatalyst, for example, the first photocatalyst may be produced by mixing a compound containing an X ion (e.g., a compound containing a Ca ion, and a compound containing a Sr ion), a compound containing a Ti ion, and a compound containing an Ag, and allowing them to coprecipitate. Alternatively, the first photocatalyst may be produced by, after producing the X·titanium hydroxyapatite, doping the X·titanium hydroxyapatite with silver. Examples of the doping method include a dipping method in the below-mentioned method for producing the first photocatalyst.

### <<X·titanium hydroxyapatite>>

The X·titanium hydroxyapatite (Ti-XHAP) is calcium·titanium hydroxyapatite (Ti-CaHAP), or a compound in which calcium of calcium·titanium hydroxyapatite (Ti-CaHAP) is substituted with an alkaline earth metal having an atomic number equal to or greater than that of strontium.

The X is appropriately selected depending on the intended purpose without any limitation, provided that it is an alkaline earth metal having an atomic number equal to or higher than that of calcium, and examples thereof include calcium, strontium, barium, radium. Among them, preferred are calcium, and strontium.

### -Calcium·Titanium Hydroxyapatite (Ti-CaHAP)-

The calcium·titanium hydroxyapatite (Ti-CaHAP) is a compound, in which at least part of calcium in calcium hydroxyapatite (e.g., Ca₁₀(PO₄)₆(OH)₂) is substituted with Ti (titanium).

Examples of the calcium-titanium hydroxyapatite include Ca₉Ti(PO₄)₆(OH)₂, and Ca₈Ti(PO₄)₆(OH)₂.

The calcium hydroxyapatite(CaHAP) is preferable because the calcium hydroxyapatite (CaHAP) easily exchange ions with either cations or anions, so that the calcium hydroxyapatite (CaHAP) has excellent adsorption ability to various decomposition targets, exhibits excellent adsorption especially to organic matter, such as protein, and moreover excellent adsorption to microorganism, such as virus, mold, and bacteria, and hence increase or growth thereof can be inhibited or suppressed.

Note that, the decomposition target is appropriately selected depending on the intended purpose without any limitation, and examples of the decomposition target, other than mentioned above, include protein, amino acid, lipids, and glucide. As for the decomposition target, one of those mentioned above may be contained, or two or more thereof may be contained. Specific examples of the decomposition target include a dirt substance typically originated from human skin, garbage, dusts, sludge, unnecessary components, waste fluid, toxic substances in the soil or the air, sludge, microorganism, and virus.

Examples of the toxic substance include acetaldehyde gas.

The microorganism is appropriately selected depending on the intended purpose without any limitation, and the microorganism may be prokaryotic organism, or eukaryotic organism. Moreover, protozoa are also included in the microorganism. Examples of the prokaryotic organism include bacteria, such as E. coli, and staphylococcus aureus. Examples of the eukaryotic organism include mold fungi, such as yeast, mold, and Actinomyces.

Examples of the virus include DNA virus, and RNA virus. Specific examples thereof include influenza virus.

These decomposition targets may be present in any state of a solid, a liquid, or a gas. In the case where the decomposition target is liquid, examples thereof include waste fluid, nutrient solution, and circulating fluid. In the case where the decomposition target is liquid, examples thereof include air, exhaust gas, and circulating gas.

Since Ti (titanium) is introduced (by substitution) into a crystal structure of the calcium hydroxyapatite (CaHAP) as part of metal atoms constituting the crystal structure, i.e., part of the Ca (calcium) site is substituted with Ti (titanium), a photocatalytic partial structure, which can exhibit photocatalytic activities, is formed in the crystal structure of the photocatalyst.

When the photocatalyst has the aforementioned photocatalytic partial structure (metal oxide structure), the photocatalyst exhibits photocatalytic activities, and the apatite structure segment has excellent adsorption. Therefore, such the photocatalyst has excellent adsorption to a decomposition target compared to a conventional metal oxide having photocatalytic activities, and thus has excellent decomposition ability, antibacterial action, antifouling action, and inhibition or suppression of mold or bacteria.

The aforementioned functions can be also attained with titanium hydroxyapatite, in which calcium is substituted with an alkaline earth metal having an atomic number equal to or greater than that of calcium.

### -Strontium·Titanium Hydroxyapatite (Ti-SrHAP)-

The strontium·titanium hydroxyapatite (Ti-SrHAP) is a compound, in which calcium in calcium·titanium hydroxyapatite (Ti-CaHAP) is substituted with strontium. The strontium·titanium hydroxyapatite (Ti-SrHAP) is a high performance photocatalyst, and is the second photocatalyst. The details thereof are described later.

### <Silver>

As the X·titanium hydroxyapatite is doped with the silver, responsibility to light including visible light is added to a photocatalytic function of the X·titanium hydroxyapatite, and the doped X·titanium hydroxyapatite, i.e., the photocatalyst (first photocatalyst) has excellent absorbance to light including visible light, and functions as a high performance photocatalyst having photocatalytic activities to light of a wide wavelength range.

The silver is preferably introduced into the X(I) site and/or X(II) site of the X·titanium hydroxyapatite by doping, as a high performance photocatalyst can be attained.

Note that, whether or not the silver is introduced into the X(I) site and/or X(II) site of the X·titanium hydroxyapatite by doping can be confirmed by X-ray absorption near edge structure (XANES) analysis performed in X-ray absorption spectroscopy, or the Rietveld method performed in neutron diffraction.

As the silver is introduced into the X·titanium hydroxyapatite by doping, especially, the silver is introduced into the X(I) site and/or X(II) site of the X·titanium hydroxyapatite by doping, the resulting photocatalyst (first photocatalyst) is a high performance photocatalyst having photocatalytic activities to light of a wide wavelength range. The reasons for this are considered as follows.

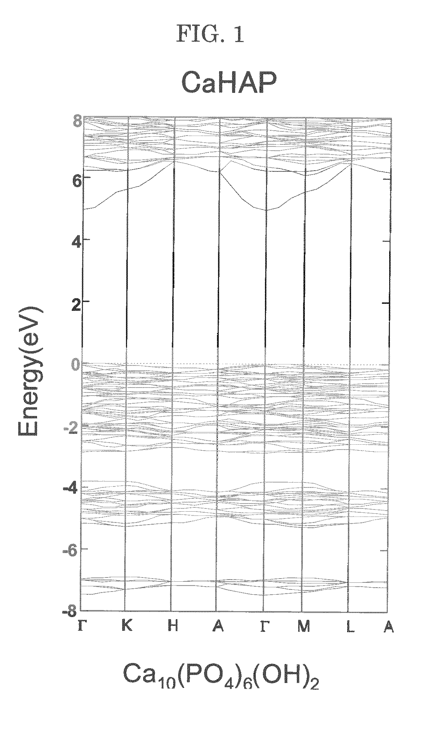

FIGs. 1 to 2 depict band structures of calcium hydroxyapatite (Ca₁₀(PO₄)₆(OH)₂), and calcium·titanium hydroxyapatite (TiCa₈(PO₄)₆(OH)₂) determined by the first-principles energy band calculation (density functional method).

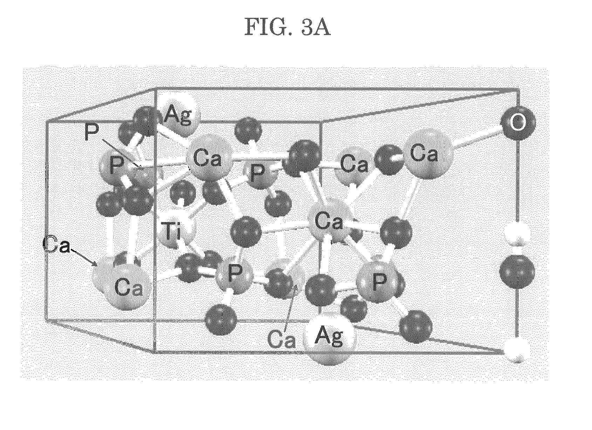

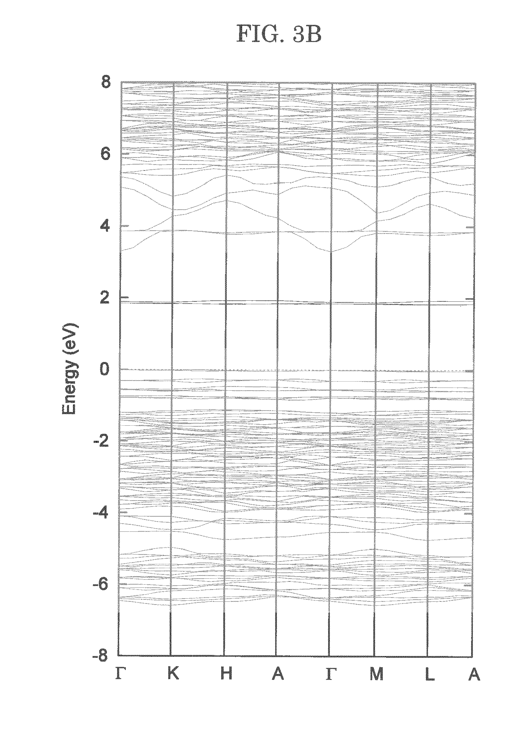

FIGs. 3A to 8A depict one example (Ca₇TiAg₂(PO₄)₆(OH)₂) of the structure of TiAg-XHAP [(TiAg-CaHAP) where X is]. Then, FIGs. 3B to 8B depict band structures of the structures depicted in FIGs. 3A to 8A, respectively, determined by the first-principles energy band calculation (density functional method).

Note that, the band gap calculated by the density functional method tends to be typically underestimated, and therefore it is considered that the calculated band gap is smaller than the actual value.

As depicted in FIG. 1, a band structure of calcium hydroxyapatite (Ca₁₀(PO₄)₆(OH)₂) has a wide band gap between a valence band and a conduction band, and therefore the calcium hydroxyapatite does not exhibit a photocatalytic function.

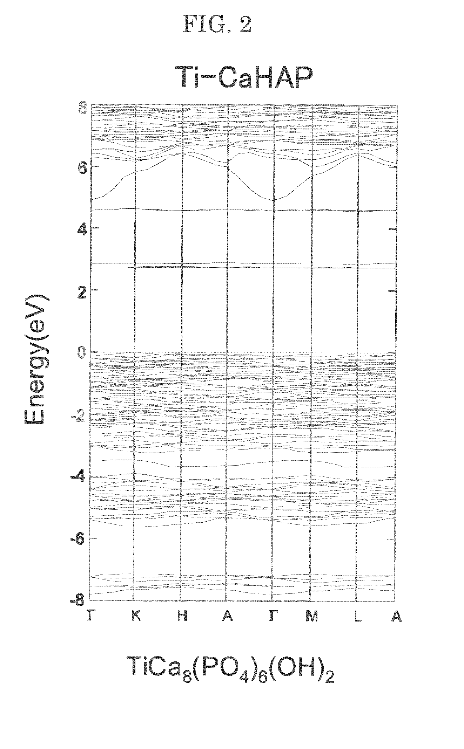

As depicted in FIG. 2, in a band structure of calcium·titanium hydroxyapatite (TiCa₈(PO₄)₆(OH)₂), a structure of a conduction band thereof is not different from the structure of the conduction band of calcium hydroxyapatite (Ca₁₀(PO₄)₆(OH)₂), but a new conduction band (adjacent to above 2.8 eV) is formed, as Ti (titanium) is introduced by doping. As a result, the band gap becomes narrow. However, the narrowed value is not sufficient, and it is not sufficient to exhibit responsibility to visible light.

As depicted in FIGs, 3B to 8B, on the other hand, the band structure of TiAg-CaHAP is further narrowed, as the conduction band is lowered on the whole, and as a result, the conduction band (adjacent to 2 eV) originated from the Ti (titanium) doping of calcium hydroxyapatite is also lowered. Therefore, responsibility to visible light is exhibited.

Note that, TiAg-CaHAP(Ca₇TiAg₂(PO₄)₆(OH)₂) of FIG. 3A is a structure where one titanium atom is introduced into the Ca(I) site, one silver atom is introduced into the Ca(I), and one silver atom is introduced into the Ca(I) site by substitution, and the band gap is 1.76 eV (FIG. 3B).

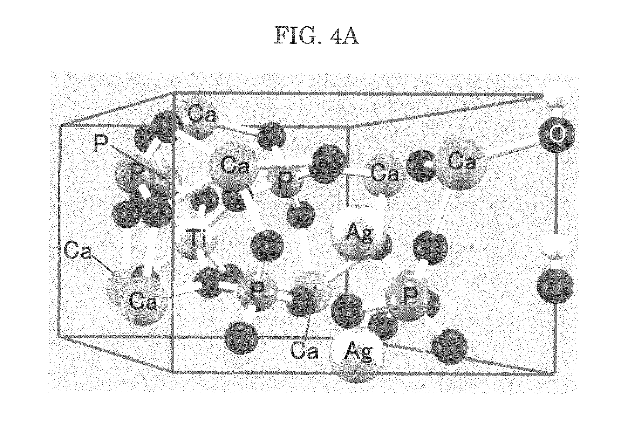

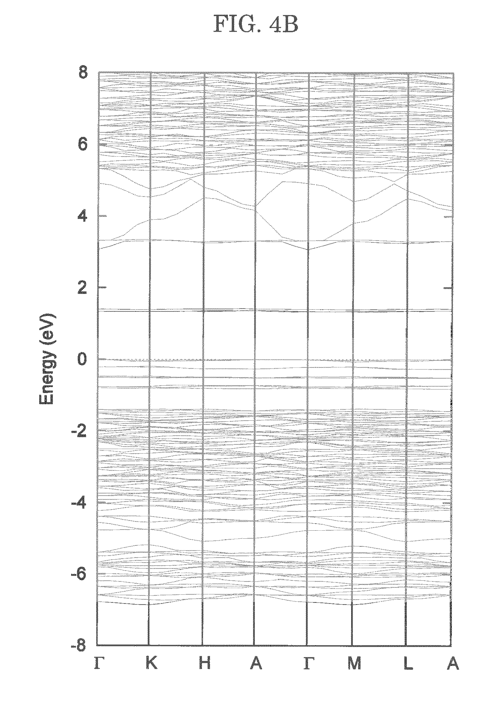

TiAg-CaHAP(Ca₇TiAg₂(PO₄)₆(OH)₂) of FIG. 4A is a structure where one titanium atom is introduced into the Ca(I) site, one silver atom is introduced into the Ca(I) site, and one silver atom is introduced into the Ca(I) site by substitution, and the band gap is 1.28 eV (FIG. 4B).

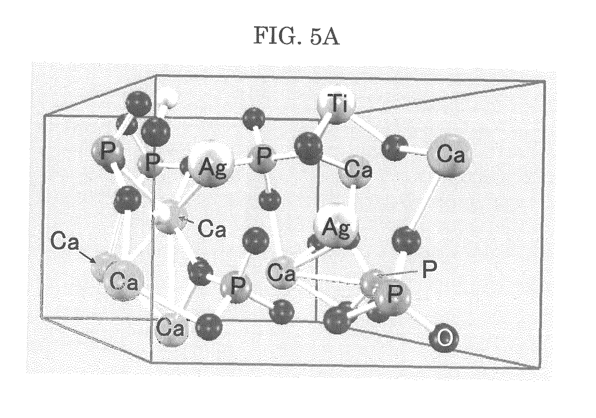

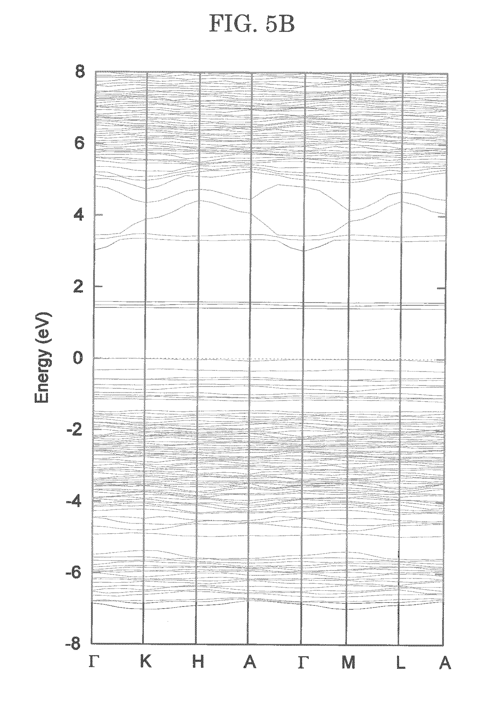

TiAg-CaHAP(Ca₇TiAg₂(PO₄)₆(OH)₂) of FIG. 5A is a structure where one titanium atom is introduced into the Ca(I) site, one silver atom is introduced into the Ca(I) site, and one silver atom is introduced into the Ca(II) by substitution, and the band gap is 1.34 eV (FIG. 5B).

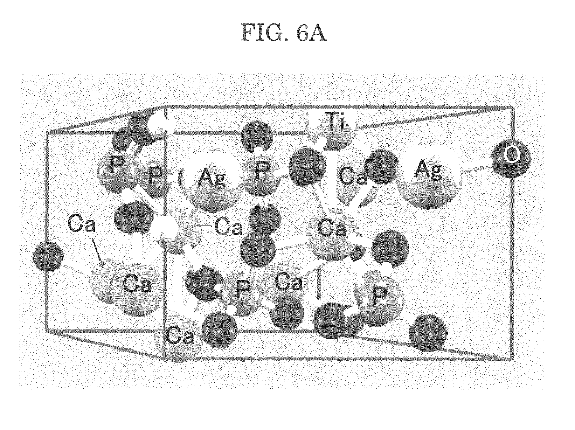

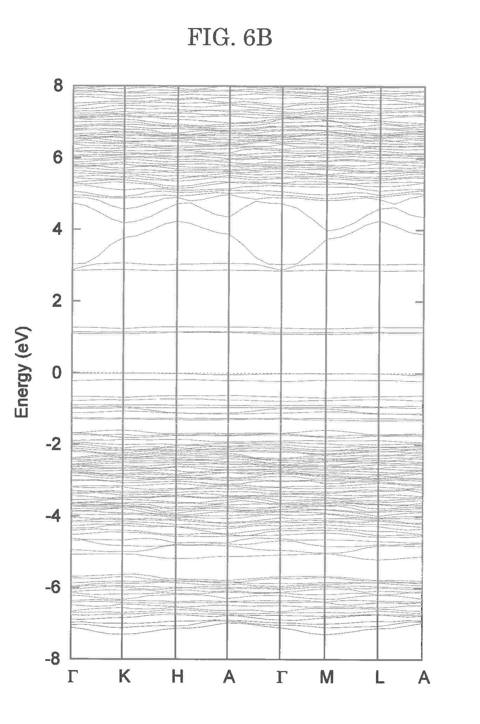

TiAg-CaHAP(Ca₇TiAg₂(PO₄)₆(OH)₂) of FIG. 6A is a structure where one titanium atom is introduced into the Ca(I) site, one silver atom is introduced into the Ca(II) site, and one silver atom is introduced into the Ca(II) site by substitution, and the band gap is 1.02 eV (FIG. 6B).

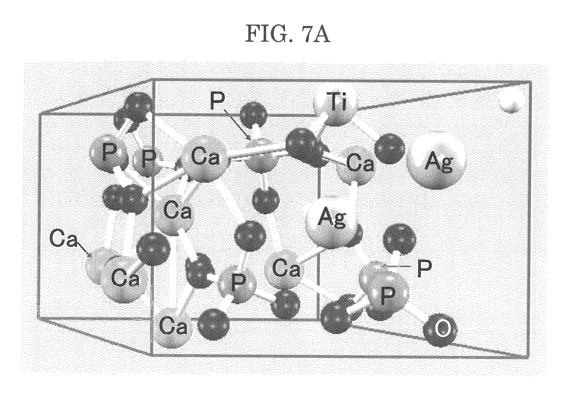

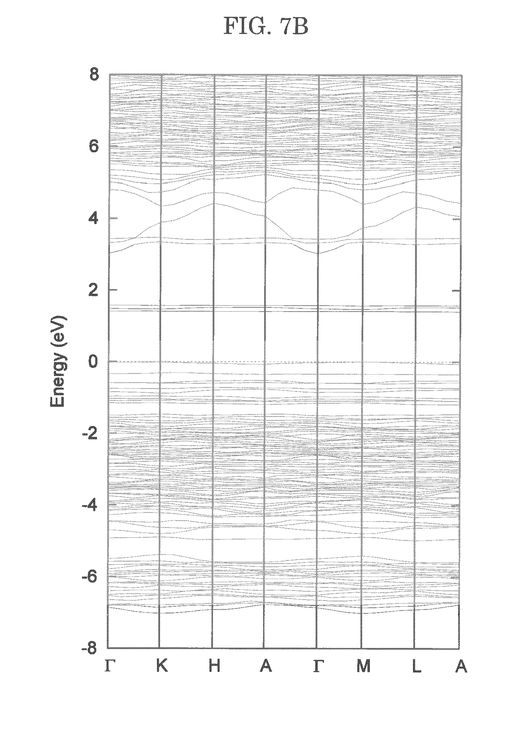

TiAg-CaHAP(Ca₇TiAg₂(PO₄)₆(OH)₂) of FIG. 7A is a structure where one titanium atom is introduced into the Ca(I) site, one silver atom is introduced into the Ca(II) site, and one silver atom is introduced into the Ca(II) site by substitution, and the band gap is 1.37 eV (FIG. 7B).

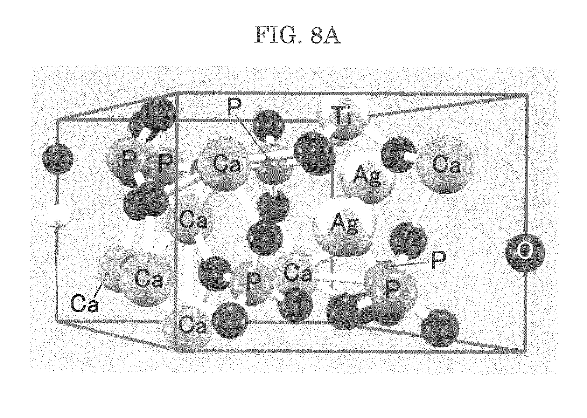

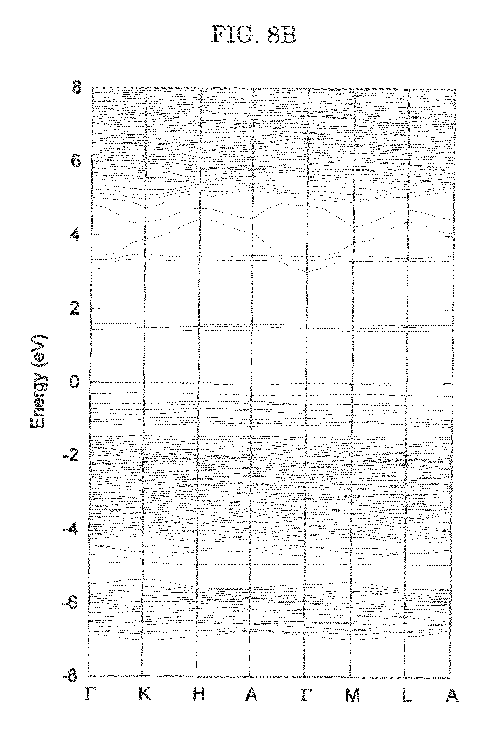

TiAg-CaHAP(Ca₇TiAg₂(PO₄)₆(OH)₂) of FIG. 8A is a structure where one titanium atom is introduced into the Ca(I) site, one silver atom is introduced into the Ca(I) site, and one silver atom is introduced into the Ca(II) site by substitution, and the band gap is 1.33 eV (FIG. 8B).

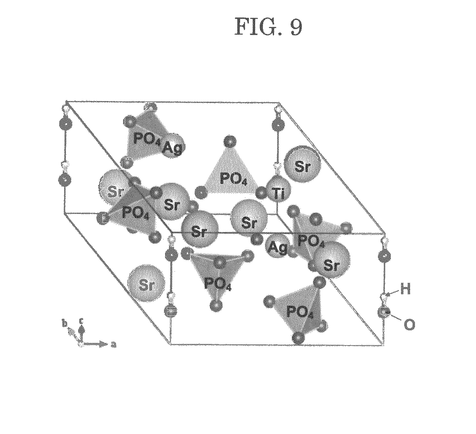

Next, FIG. 9 depicts one example of a structure of TiAg₂Sr₇(PO₄)₆(OH)₂ that is TiAg-XHAP [(TiAg-SrHAP) where X is Sr].

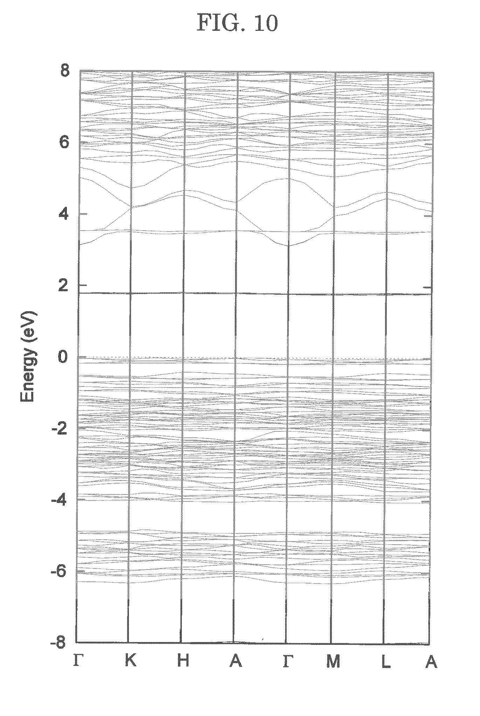

FIG. 10 depicts one example of the band structure of TiAg-SrHAP(TiAg₂Sr₇(PO₄)₆(OH)₂) determined by the first-principles energy band calculation(density functional method).

Similarly to TiAg-CaHAP, the narrowed band gap is confirmed with TiAg-SrHAP, and it is understood that TiAg-SrHAP exhibits responsibility to visible light.

A ratio of the titanium (Ti) to the silver (Ag) in the first photocatalyst is appropriately selected depending on the intended purpose without any limitation, but the molar ratio (Ti:Ag) thereof is preferably 1:1 to 1:3, more preferably 2:3 to 1:3, and particularly preferably 1:2 to 1:3. When the molar ratio is outside the aforementioned preferable range, a band gap of the photocatalyst becomes wide, and therefore visible light responsibility of the photocatalyst may be low. The molar ratio being within the aforementioned preferable range is advantageous, as a high performance photocatalyst is attained.

A combined amount of the silver and the titanium in the first photocatalyst is appropriately selected depending on the intended purpose without any limitation, but the amount is preferably 10 mol% to 50 mol%, more preferably 20 mol% to 40 mol%, relative to a total amount of the silver, the titanium, and the X in the first photocatalyst. The combined amount of the silver and the titanium being within the aforementioned preferable range is advantageous, as a high performance photocatalyst can be attained.

The amounts of the silver, titanium, and X in the first photocatalyst can be measured by a quantitative analysis using an ICP emission spectrophotometer (ICP-AES).

The first photocatalyst is effective can absorb visible light as well as ultraviolet rays, exhibits absorption to light of a wide wavelength range, has excellent light utilization efficiency, and is suitably used for use under radiation of various light. Moreover, the photocatalyst is effective because the photocatalytic activities thereof are not saturated even when either visible light and ultraviolet rays are applied, exhibits excellent photocatalytic activities over a long period, and especially, the photocatalyst can maintain excellent photocatalytic activities without saturating the photocatalytic activities when ultraviolet rays are applied over a long period.

### <Second Photocatalyst>

The second photocatalyst contains calcium-titanium hydroxyapatite at least part of calcium of which is substituted with an alkaline earth metal having an atomic number equal to or greater than that of strontium, and may further contain other components according to the necessity.

Examples of the second photocatalyst include a compound represented by the following general formula (2).

Z_{d}Tiₑ(PO₄)₆(OH)₂ General Formula (2)

In the general formula (2), Z is an alkaline earth metal having an atomic number equal to or greeter than that of strontium; d is 0.1 to 9.7; e is 0.1 to 5.0; and d+e is 9.0 to 10.0.

The "d" is preferably 2.0 to 9.7, more preferably 5.0 to 9.5, even more preferably 8.0 to 9.5, and particularly preferably 8.5 to 9.3.

The "e" is preferably 0.1 to 4.0, more preferably 0.3 to 3.0, even more preferably 0.5 to 2.0, and particularly preferably 0.7 to 1.5.

The second photocatalyst can be produced, for example, by the below-mentioned coprecipitation method.

Specifically, the production method of the second photocatalyst is appropriately selected depending on the intended purpose without any limitation, provided that the second photocatalyst is a compound having a structure where at least part of calcium of calcium·titanium hydroxyapatite is substituted with an alkaline earth metal having an atomic number equal to or greater than that of strontium. For example, the second photocatalyst may be produced by mixing an alkaline earth metal having an atomic number equal to or greater than that of strontium (e.g., a compound containing a Sr ion), and a compound containing a Ti ion, and coprecipitating, as in a coprecipitation method in the below-mentioned method for producing a second photocatalyst. Alternatively, the second photocatalyst may be produced by substituting at least part of calcium of calcium·titanium hydroxyapatite with strontium. Examples of a method of the substitution include a method in accordance with a dipping method in the below-mentioned method for producing a second photocatalyst.

Moreover, the second photocatalyst may be produced by substituting at least part of strontium of Z hydroxyapatite (note that, Z is an alkaline earth metal having an atomic number equal to or grater than strontium) with titanium. Examples of a method of the substitution include a method in accordance with a dipping method in the below-mentioned method for producing a second photocatalyst.

The Z hydroxyapatite is a compound obtained by substituting calcium of calcium hydroxyapatite with an alkaline earth metal having an atomic number equal to or grater than strontium. The Z hydroxyapatite can be produced, for example, in accordance with a coprecipitation method in the below-mentioned method for producing a second photocatalyst. The Z hydroxyapatite is preferably strontium hydroxyapatite.

### <<Calcium·Titanium Hydroxyapatite>>

The calcium·titanium hydroxyapatite (Ti-CaHAP) is a compound obtained by substituting at least part of calcium of calcium hydroxyapatite (e.g., Ca₁₀(PO₄)₆(OH)₂) with Ti (titanium).

### <<Alkaline earth metal>>

The alkaline earth metal is appropriately selected depending on the intended purpose without any limitation, provided that it is an alkaline earth metal having an atomic number equal to or greater than that of strontium, and examples thereof include strontium, barium, and radium. Among them, strontium is preferable.

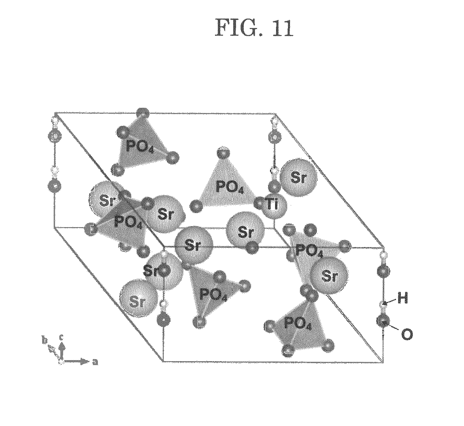

FIG. 11 depicts one example of a structure of a compound (Ti-SrHAP, TiSr₉₍₈₎(PO₄)₆(OH)₂) having a structure where the entire calcium of the calcium·titanium hydroxyapatite is substituted with strontium.

An amount of the titanium in the second photocatalyst is appropriately selected depending on the intended purpose without any limitation, but the amount thereof is preferably 5 mol% to 25 mol%, and more preferably 5 mol% to 15 mol%, relative to a total amount of the titanium and all alkaline earth metals in the second photocatalyst. When the amount of the titanium is within the aforementioned preferable range, it is advantageous, as a high performance photocatalyst can be attained.

The amount of the titanium in the second photocatalyst and the amount of the alkaline earth metal in the second photocatalyst are measured, for example, by performing a quantitative analysis using ICP emission spectrophotometer (ICP-AES).

The second photocatalyst has more excellent light utilization efficiency to ultraviolet rays than the calcium-titanium hydroxyapatite, and exhibits excellent photocatalyst.

### <Shape etc. of Photocatalyst>

A shape, structure, and size of the photocatalyst are appropriately selected depending on the intended purpose without any limitation.

Examples of the shape thereof include a powder, particles, pellets, a rod, a plate, a block, a sheet, and a film. Among them, a powder is preferable in view of handling.

Examples of the structure thereof include a single-layer structure, a laminate structure, a porous structure, and a core-shell structure.

Note that, the determination, and observation of the embodiment of the photocatalyst can be performed by means of a transmission electron microscope (TEM), X-ray diffractometer (XRD), X-ray photoelectron spectrometer (XPS), Fourier transform infrared spectrometer (FT-IR), or ICP emission spectrophotometer (ICP-AES).

### <Aspect of Use>

The photocatalyst may be used alone, or may be used in combination with other compounds, or may be used as slurry obtained by dispersing the photocatalyst in a liquid. In the case where the photocatalyst is used as the slurry, the liquid thereof is preferably a water-based solvent, or an alcohol-based solvent. The slurry can be suitably used as slurry containing the photocatalyst.

The photocatalyst may be used alone, or used as a mixture composition obtained by pulverizing the photocatalyst, and mixing the pulverized photocatalyst with another composition, or may be used as a film (surface coating) by adhering, coating, or depositing on a base. Note that, in the case where the photocatalyst is adhered, coated, or deposited on a base, a coating liquid is suitably used.

A method of the pulverizing is appropriately selected depending on the intended purpose without any limitation, and examples thereof include a method containing pulverizing using a ball mill.

The aforementioned another composition is appropriately selected depending on the intended purpose without any limitation, and examples thereof include a printing ink.

A method of the mixing is appropriately selected depending on the intended purpose without any limitation, and examples thereof include a method using a kneader or a stirrer.

A material, shape, structure and thickness of the base are appropriately selected depending on the intended purpose without any limitation. Examples of the material thereof include paper, synthetic paper, woven cloth, nonwoven cloth, leather, wood, glass, metal, ceramic, and a synthetic resin. Examples of the shape thereof include a foil, a film, a sheet, and a plate.

The method of the adhering is appropriately selected depending on the intended purpose without any limitation, and examples thereof include atomizing.

The method of the coating is appropriately selected depending on the intended purpose without any limitation, and examples thereof include spray coating, curtain coating, spin coating, gravure coating, inkjet coating, and dip coating.

Examples of the method of the depositing include CVD, sputtering, and vacuum deposition.

The coating liquid is appropriately selected depending on the intended purpose without any limitation, provided that the coating liquid contains the photocatalyst. Examples thereof include a coating liquid obtained by adding an alcohol solution, which is obtained by adding the photocatalyst to isopropyl alcohol (IPA), to a cold setting inorganic coating agent (a coating agent obtained by mixing a liquid agent of trade name S00 and a liquid agent of trade name UTE01, both of which are manufactured by Nihon Yamamura Glass Co., Ltd., in a mixing ratio of 10:1) serving as an inorganic coating liquid, and mixing the mixture.

### <Application>

The photocatalyst has excellent photocatalytic activities or decomposition ability to various decomposition targets, can efficiently decompose the decomposition target, does not reduce (does not saturate) the photocatalytic activities thereof over a long period, does not discolor or deteriorate a resin when mixed with the resin, and is not separated or detached from the resin. Therefore, the photocatalyst is suitably used in various fields. The photocatalyst is suitably used for various products used under radiation of sun light, and various product used under radiation of ultraviolet rays. Specifically, the photocatalyst is suitably used for OA equipment (e.g., housing of a personal computer, a mouse, and a key board), electronic equipment (e.g., a phone, a photocopier, a facsimile, various printers, a digital camera, a video camera, a CD device, a DVD device, an air conditioner, and a remote control device), electric appliance (e.g., a dish washer, a dish dryer, a tumble dryer, a washing machine, an air cleaner, a humidifier, an electric fan, a ventilation fan, a vacuum cleaner, and a kitchen waste processer), mobile information terminal (e.g., PDA and a mobile phone), a filter (filter for gas: a filter used for an air cleaner or air conditioner, a filter for liquid: a filter used for treating a fluid used in water culture, a filter for solids: a filter used for improving soil, and a filter for a camera), wall paper, a food container (e.g., a reusable food container, and a disposal food container), medical equipment and sanitary product (e.g., a mask section of an oxygen inhaler, bandage, a mask, and antifungal gloves), textiles, such as clothing, artificial tooth, interior and exterior materials (interior and exterior materials formed of a resin, paper, cloth, ceramic, or metal; materials for a bath, a swimming pool, and building materials; materials to which light emitted from a fluorescent lamp is applied when it is handled, and ultraviolet rays are applied when it is not handled, such as a material for a medical facility, a material for a bio laboratory, and a material for a clean bench), vehicles (e.g., interior materials, and side mirrors), rings (e.g., rings used in trains, and buses), a steering wheel (e.g., steering wheels for a bicycle, tricycle, motorcycle, and automobile), a saddle (e.g., saddles for a bicycle, tricycle, and motorcycle), shoes (e.g., shoes made of cloth, resin, synthetic leather, and synthetic resin), a bag (e.g., bags made of cloth, resin, synthetic leather, and synthetic resin), a coating agent (e.g., a coating film), a sewage and waste water treating material (e.g., a material, in which a photocatalyst having absorbance to light of a wide range is blended in porous silica), a sheet (e.g., a soil treatment sheet), electrodes of a biochip (in combination with an organic dye), a mirror (e.g., a bathroom mirror, a lavatory mirror, a dental mirror, and a road mirror), a lens (e.g., spectacle lens, an optical lens, a lens for lighting, a lens for semiconductor devices, a lens for a photocopier, and a lens for a rear sensor camera for vehicle), prism, glass (e.g., window glass for buildings or watchtower; window glass for vehicle, such as automobile, trains, aircraft, ship, submersible, snowmobile, ropeway gondola, gondola for amusement parks, and space ship; windshield glass for vehicle, such as automobile, trains, aircraft, ship, submersible, snowmobile, ropeway gondola, gondola for amusement parks, and space ship; glass of a display case for frozen food, and glass of a display case for heating food, such as Chinese steamed bun), goggles (e.g., protective goggles, and sports goggles), a shield (e.g., a shield for a protective mask, shield for a sports mask, and shield of a helmet), a cover (e.g., a cover for measuring equipment, and a cover of a rear sensor camera for an automobile), a lens (e.g., a focusing lens, such as for laser dental equipment), a cover (e.g., a cover of a laser photodetecting sensor, such as a following distance sensor, a cover of an infrared sensor, a film, a sheet, a sticker, and an emblem).

Moreover, the photocatalyst is suitably used for a medical product, food and drink, and (bio) laboratory wall paper, device (e.g., a clean bench), tools (e.g., a spatula), instrument (e.g., a beaker), fittings (e.g., a chip for a micropipette, and Eppendorf tube), to which light of a fluorescent lamp is applied during day, and ultraviolet rays are applied during night for sterilization and disinfection. When the photocatalyst is used for the aforementioned uses, it is extremely effective, as high photocatalytic activities are attained continuously for 24 hours, and a decomposition target is constantly decomposed. Moreover, the photocatalyst can be suitably used for air purification of interior of a clean room or a focus space in a clean room, namely, used for decomposition of removal of organic gas that makes a surface of a silicon wafer hydrophobic as the organic gas is adhered on the surface of the silicon wafer to lower adhesion of a film formed later. Specifically, the photocatalyst is suitably used for wall materials of a clean room, a filter of a duct, equipment, and fittings. When the photocatalyst is used for the aforementioned uses, it is extremely effective, as a decomposition target can be efficiently decomposed.

A production method of the photocatalyst is appropriately selected depending on the intended purpose without any limitation, but the photocatalyst is preferably produced by the following method.

### (Method for Producing Photocatalyst)

The disclosed method for producing a photocatalyst is a method for producing the photocatalyst through a coprecipitation method.

Moreover, the photocatalyst can be produced through a dipping method.

### <Method for Producing First Photocatalyst>

### «Coprecipitation Method»

The coprecipitation method is appropriately selected depending on the intended purpose without any limitation, provided that it is, for example, a method that produces the first photocatalyst through coprecipitation of an alkaline earth metal having the atomic number equal to or greater than that of Ca (calcium) (such an alkaline earth metal may be referred to as "X" hereinafter), Ti (titanium), and Ag (silver) from a solution containing an X ion, a Ti ion, and an Ag ion. Examples thereof include a coprecipitation method containing at least a mixing step where a compound containing an X ion, a compound containing a Ti, and a compound containing an Ag ion, a step where a phosphoric acid compound is added, and an aging step, preferably further containing a pH adjusting step, a filtration step, a washing step, and a drying step, and optionally further containing other steps according to the necessity.

### -Mixing Step-

The mixing step is mixing a compound containing an X ion, a compound containing a Ti ion, and a compound containing an Ag ion.

The compound containing an X ion is appropriately selected depending on the intended purpose without any limitation, and examples thereof include a compound containing a Ca (calcium) ion, a compound containing a Sr (strontium), a compound containing a Ba (barium) ion, and a compound containing a Ra (radium) ion. Among them, preferred are the compound containing a Ca ion, and the compound containing a Sr ion, as a photocatalyst having an excellent responsibility to visible light can be attained.

Examples of the compound containing a Ca ion include calcium oxoacid. Examples of the calcium oxoacid include calcium nitrate, and calcium sulfate. Examples of the calcium nitrate include calcium nitric acid anhydride, calcium nitrate tetrahydrate, and calcium nitrate hexahydrate.

Examples of the compound containing a Sr ion include strontium hydroxide, and strontium oxoacid. Examples of the strontium oxoacid include strontium nitrate, and strontium sulfate. Examples of the strontium hydroxide include strontium hydroxide octahydrate.

Examples of the compound containing a Ba ion include barium hydroxide, and barium oxoacid. Examples of the barium oxoacid include barium nitrate.

Examples of the compound containing a Ra ion include radium chloride, radium hydroxide, and radium sulfate.

The compound containing a Ti ion is appropriately selected depending on the intended purpose without any limitation, and examples thereof include titanium oxoacid. Examples of the titanium oxoacid include titanium sulfate. Examples of the titanium sulfate include a titanium (IV) sulfate solution.

The compound containing an Ag ion is appropriately selected depending on the intended purpose without any limitation, and examples thereof include silver oxoacid. Examples of the silver oxoacid include silver nitrate, and silver sulfate.

The mixing is preferably performed in the presence of water. The water is appropriately selected depending on the intended purpose without any limitation, but the water is preferably pure water. Moreover, the water is preferably subjected to a decarbonation treatment.

The mixing is preferably performed under inert gas atmosphere. The inert gas is appropriately selected depending on the intended purpose without any limitation, and examples thereof include nitrogen gas.

The mixing step may be carried out with maintaining pH of the system in a predetermined range. For example, the mixing step is preferably carried out with maintaining pH of the system in a range of 9.0 to 12.0.

A method for maintaining the pH in the predetermined range is appropriately selected depending on the intended purpose without any limitation, and examples thereof include a method where acid or base is added to the system. The acid is appropriately selected depending on the intended purpose without any limitation. The base is appropriately selected depending on the intended purpose without any limitation, and examples thereof include potassium hydroxide.

### -Phosphoric Acid Compound Adding Step-

The step where a phosphoric acid compound is added is appropriately selected depending on the intended purpose without any limitation, provided that the step is a step where a phosphoric acid compound is added to the mixture obtained in the mixing step.

The phosphoric acid compound is appropriately selected depending on the intended purpose without any limitation, and examples thereof include phosphoric acid, and a phosphoric acid salt. Examples of the phosphoric acid salt include potassium phosphate, potassium hydrogenphosphate, and dipotassium hydrogenphosphate.

An amount of the phosphoric acid compound added is appropriately selected depending on the intended purpose without any limitation.

### -pH Adjusting Step-

The pH adjusting step is appropriately selected depending on the intended purpose without any limitation, and examples thereof include a step where base is added to a suspension liquid obtained in the step where the phosphoric acid compound is added. The base is appropriately selected depending on the intended purpose without any limitation, and examples thereof include potassium hydroxide.

The pH of the system after the pH adjusting step is preferably 8.0 or higher, more preferably 8.0 to 13.0, and particularly preferably 9.5 to 13.0.

### -Aging Step-

The aging step is appropriately selected depending on the intended purpose without any limitation, provided that the aging step is a step where aging, i.e., heating, the suspension liquid obtained in the step where the phosphoric acid compound, or the suspension liquid obtained in the pH adjusting step performed successively after the step where the phosphoric acid compound is added.

The temperature for the heating is, for example, 80°C to 120°C.

The duration for the heating is appropriately selected depending on the intended purpose without any limitation, and the duration is, for example, 1 hour to 36 hours.

The heating is appropriately selected depending on the intended purpose without any limitation, and examples thereof include a method where heating is performed using a drying furnace.

### -Filtration Step-

The filtration step is appropriately selected depending on the intended purpose without any limitation, provided that the filtration step is a step where the suspension liquid obtained after the aging step is filtered.

### -Washing Step-

The washing step is appropriately selected depending on the intended purpose without any limitation, provided that the washing step is a step where the sediments obtained in the filtration step is washed. Examples thereof include a step where the sediments are washed with water. Examples of the water include pure water.

### -Drying Step-

The drying step is appropriately selected depending on the intended purpose without any limitation, provided that the washed product obtained in the washing step is dried. Examples thereof include where the washed product is dried for 1 hour to 24 hours at 80°C to 120°C.

Through the coprecipitation method, the first photocatalyst is obtained.

### «Dipping Method»

The dipping method is appropriately selected depending on the intended purpose without any limitation, and examples thereof include: a method where particles of the X·titanium hydroxyapatite are immersed in an aqueous solution, in which a compound containing an Ag ion has been dissolved; and a method where a compound containing an Ag ion is added to and dissolved in a dispersion liquid of particles of the X·titanium hydroxyapatite.

The compound containing an Ag ion is appropriately selected depending on the intended purpose without any limitation, and examples thereof include the compound containing an Ag ion listed in the descriptions of the coprecipitation method.

The X·titanium hydroxyapatite is appropriately selected depending on the intended purpose without any limitation. In the case where the X is calcium, i.e., the X·titanium hydroxyapatite is the calcium·titanium hydroxyapatite, a commercial product can be used as the X·titanium hydroxyapatite. Examples of the commercial product of the calcium·titanium hydroxyapatite include PCAP-100 (TiHAP, manufactured by TAIHEI CHEMICAL INDUSTRIAL CO., LTD.).

In the case where the X is strontium, barium, or radium, the X·titanium hydroxyapatite obtained by the below-mentioned method for producing a second photocatalyst can be used, as titanium hydroxyapatite is the second photocatalyst.

In the dipping method, a filtration step, washing step, drying step, and/or annealing step may be further carried out according to the necessity, after mixing the particles of the X·titanium hydroxyapatite and the compound containing an Ag ion.

### -Filtration Step-

The filtration step is appropriately selected depending on the intended purpose without any limitation, provided that the filtration step is a step where the mixture obtained by mixing the particles of the X·titanium hydroxyapatite and the compound containing an Ag ion is filtered.

### -Washing Step-

The washing step is appropriately selected depending on the intended purpose without any limitation, provided that the washing step is a step where the sediments obtained in the filtration step are washed. Examples thereof include a method where the sediments are washed with water. Examples of the water include pure water.

### -Drying Step-

The drying step is appropriately selected depending on the intended purpose without any limitation, provided that the drying step is a step where the washed product obtained in the washing step is dried. Examples thereof include a step where the washed product is dried for 1 hour to 24 hours at 80°C to 120°C.

### -Annealing Step-

The annealing step is appropriately selected depending on the intended purpose without any limitation, provided that the annealing step is a step where the dried product obtained in the drying step is annealed. Examples thereof include a step where the dried product is heated for 10 minutes to 2 hours at 600°C to 800°C.

Through the dipping method, ion-exchange is performed. Specifically, X. or Ti, or both thereof on surfaces of the particles of the X·titanium hydroxyapatite and Ag exchange ions, to thereby obtain a photocatalyst, in which silver is introduced on surfaces of the particles of the X·titanium hydroxyapatite, i.e., the first photocatalyst.

### <Method for Producing Second Photocatalyst>

### «Coprecipitation Method»

The coprecipitation method is appropriately selected depending on the intended purpose without any limitation, provided that the coprecipitation method is, for example, a method that produces the second photocatalyst through coprecipitation of an alkaline earth metal having the atomic number equal to or greater than that of Sr (strontium) (such an alkaline earth metal may be referred to as "Z" hereinafter), and Ti (titanium) from a solution containing a Z ion and Ti ion. Examples thereof include a method containing at least a mixing step where a compound containing a Z ion, and a compound containing a Ti ion are mixed, a step where a phosphoric acid compound is added, and an aging step, preferably further containing a pH adjusting step, a filtration step, a washing step, and a drying step, and optionally further containing other steps according to the necessity.

### -Mixing Step-

The mixing step is mixing a compound containing a Z ion, and a compound containing a Ti ion.

The compound containing a Z ion is appropriately selected depending on the intended purpose without any limitation, and examples thereof include a compound containing a Sr (strontium) ion, a compound containing a Ba (barium) ion, and a compound containing a Ra (radium) ion. Among them, the compound containing a Sr ion is preferable, as a photocatalyst having excellent responsibility to light can be attained.

Examples of the compound containing a Sr ion include strontium hydroxide, and strontium oxoacid. Examples of the strontium oxoacid include strontium nitrate, and strontium sulfate. Examples of the strontium hydroxide include strontium hydroxide octahydrate.

Examples of the compound containing a Ba ion include barium hydroxide, and barium oxoacid. Examples of the barium oxoacid include barium nitrate.

Examples of the compound containing a Ra ion include radium chloride, radium hydroxide, and radium sulfate.

The compound containing a Ti ion is appropriately selected depending on the intended purpose without any limitation, and examples thereof include titanium oxoacid. Examples of the titanium oxoacid include titanium sulfate. Examples of the titanium sulfate include a titanium (IV) sulfate solution.

The conditions for the mixing are appropriately selected depending on the intended purpose without any limitation, and examples thereof include the same conditions to those described in the mixing step of the coprecipitation method of the method for producing the first photocatalyst.

### -Phosphoric Acid Compound Adding Step-

The step where a phosphoric acid compound is added is appropriately selected depending on the intended purpose without any limitation, provided that the step is a step where a phosphoric acid compound is added to the mixture obtained in the mixing step.

The phosphoric acid compound is appropriately selected depending on the intended purpose without any limitation, and examples thereof include the same compounds listed in the step where the phosphoric acid compound is added in the coprecipitation method of the method for producing the first photocatalyst.

### -pH Adjusting Step, Aging Step, Filtration Step, Washing Step, Drying Step-

The pH adjusting step is appropriately selected depending on the intended purpose without any limitation, and examples thereof include the same step to the pH adjusting step of the coprecipitation method of the method for producing the first photocatalyst.

The aging step is appropriately selected depending on the intended purpose without any limitation, and examples thereof include the same step to the aging step of the coprecipitation method of the method for producing the first photocatalyst.

The filtration step is appropriately selected depending on the intended purpose without any limitation, and examples thereof include the same step to the filtration step of the coprecipitation method of the method for producing the first photocatalyst.

The washing step is appropriately selected depending on the intended purpose without any limitation, and examples thereof include the same step to the washing step of the coprecipitation method of the method for producing the first photocatalyst.

The drying step is appropriately selected depending on the intended purpose without any limitation, and examples thereof include the same step to the drying step of the coprecipitation method of the method for producing the first photocatalyst.

Through the coprecipitation method, the second photocatalyst is obtained.

### «Dipping Method»

The dipping method is appropriately selected depending on the intended purpose without any limitation, and examples thereof include: a method where particles of the calcium-titanium hydroxyapatite is immersed in a solution, in which a compound containing a Z ion (the Z denotes an alkaline earth metal having an atomic number equal to or greater than that of Sr (strontium)) has been dissolved; and a method where a compound containing a Z ion is added to and dissolved in the calcium·titanium hydroxyapatite.

The compound containing a Z ion is appropriately selected depending on the intended purpose without any limitation, and examples thereof include the compound containing a Z ion listed in the descriptions of the coprecipitation method.

The calcium·titanium hydroxyapatite is appropriately selected depending on the intended purpose without any limitation.

In the dipping method, a filtration step, washing step, drying step, and/or annealing step may be further carried out according to the necessity, after mixing the particles of the calcium·titanium hydroxyapatite and the compound containing a Z ion.

### -Filtration Step, Washing Step, Drying Step, Annealing Step-

The filtration step is appropriately selected depending on the intended purpose without any limitation, and examples thereof include the same method to the filtration method of the dipping method of the method for producing the first photocatalyst.

The washing step is appropriately selected depending on the intended purpose without any limitation, and examples thereof include the same step to the washing step of the dipping method of the method for producing the first photocatalyst.

The drying step is appropriately selected depending on the intended purpose without any limitation, and examples thereof include the same step to the drying step of the dipping method of the method for producing the first photocatalyst.

The annealing step is appropriately selected depending on the intended purpose without any limitation, and examples thereof include the same step to the annealing step of the dipping method of the method for producing the first photocatalyst.

The second photocatalyst is obtained by the dipping method.

### Examples

The disclosed photocatalyst and the disclosed method for producing a photocatalyst are specifically explained through Examples, but Examples shall not construed to as limit aspects of the disclosed photocatalyst and the disclosed method for producing a photocatalyst. Note that, in Examples below, "%" denotes "% by mass" unless otherwise stated.

In Examples and Comparative Examples below, amounts of strontium, calcium, titanium, and silver were measured by a quantitative analysis using an ICP emission spectrophotometer (ICP-AES).

### (Example 1)

### <Preparation ofAg-Doped Calcium·Titanium Hydroxyapatite (Sample 1)>

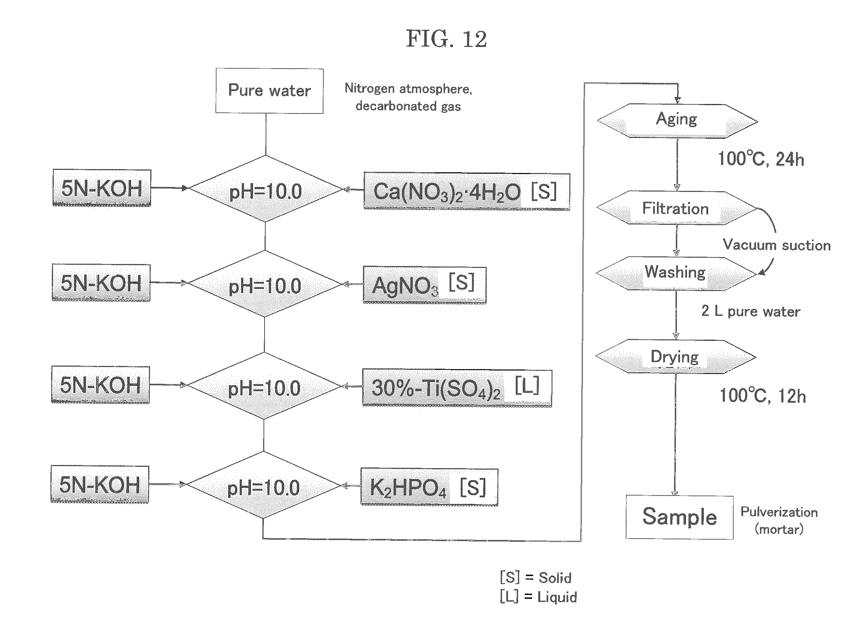

In accordance with the synthesis scheme depicted in FIG. 12, Ag-doped calcium·titanium hydroxyapatite (TiAg-CaHAP) was prepared.

First, 1 L of pure water, which had been subjected to a decarbonation treatment, was prepared. The pure water was mixed with 16.53 g of Ca(NO₃)₂·4H₂O, 3.40 g of Ag(NO₃)₂, and 8.00 g of a 30%-Ti(SO₄)₂ aqueous solution in nitrogen atmosphere, and the resulting mixture was stirred. During this process, pH of the system was maintained at 10.0 with adding 5N-KOH.

Subsequently, to the obtained mixture, 10.45 g of K₂HPO₄ was added, followed by adding 5N-KOH to adjust the pH of the system to 12.0, to thereby prepare a suspension liquid.

Subsequently, the obtained suspension liquid was aged for 24 hours at 100°C, followed by filtering the suspension liquid, in which precipitation had been caused, through vacuum filtration. The separated sediments were washed with 2 L of pure water, and then dried for 12 hours in a dry oven of 100°C. Thereafter, the resultant was pulverized by a mortar, to thereby obtain Ag-doped calcium-titanium hydroxyapatite (Sample 1).

In Sample 1, an amount of the silver was 20 mol% relative to a total amount of the silver, the titanium, and the calcium. Moreover, a molar ratio (Ti:Ag) of the titanium (Ti) to the silver (Ag) was 1:2.

### (Example 2)

Ag-doped calcium·titanium hydroxyapatite (Sample 2) was obtained in the same manner as in Example 1, provided that a combination of the raw materials was changed as depicted in Table 1.

In Sample 2, an amount of the silver was 10 mol% relative to a total amount of the silver, the titanium, and the calcium. Moreover, a molar ratio (Ti:Ag) of the titanium (Ti) to the silver (Ag) was 1:1.

### (Example 3)

Ag-doped calcium·titanium hydroxyapatite (Sample 3) was obtained in the same manner as in Example 1, provided that a combination of the raw materials was changed as depicted in Table 1.

In Sample 3, an amount of the silver was 30 mol% relative to a total amount of the silver, the titanium, and the calcium. Moreover, a molar ratio (Ti:Ag) of the titanium (Ti) to the silver (Ag) was 1:3.

### (Example 4)

Ag-doped calcium-titanium hydroxyapatite (Sample 4) was obtained in the same manner as in Example 1, provided that a combination of the raw materials was changed as depicted in Table 1.

In Sample 4, an amount of the silver was 15 mol% relative to a total amount of the silver, the titanium, and the calcium. Moreover, a molar ratio (Ti:Ag) of the titanium (Ti) to the silver (Ag) was 1:1.5.

### (Comparative Example 1)

Ag-doped calcium-titanium hydroxyapatite (Sample 5) was obtained in the same manner as in Example 1, provided that a combination of the raw materials was changed as depicted in Table 1.

In Sample 5, an amount of the silver was 0 mol% relative to a total amount of the silver, the titanium, and the calcium. Moreover, a molar ratio (Ti:Ag) of the titanium (Ti) to the silver (Ag) was 1:0, namely, no silver was obtained.

### (Comparative Example 2)

Ag-doped calcium-titanium hydroxyapatite (Sample 6) was obtained in the same manner as in Example 1, provided that a combination of the raw materials was changed as depicted in Table 1.

In Sample 6, an amount of the silver was 10 mol% relative to a total amount of the silver, the titanium, and the calcium. Moreover, a molar ratio (Ti:Ag) of the titanium (Ti) to the silver (Ag) was 0:1, namely, no titanium was contained.

**Table 1**

| | Sample | Target composition (molar ratio) | | | | Blended amount (g) | | | |
|---|---|---|---|---|---|---|---|---|---|
| | | Ca | Ag | Ti | P | Ca(NO₃)₂· 4H₂O | AgNO₃ | 30%-Ti(SO₄)₂ | K₂HPO₄ |
| Comp. Ex. 1 | 5 | 9.0 | 0.0 | 1.0 | 6.0 | 21.25 | 0.00 | 8.00 | 10.45 |
| Ex. 1 | 1 | 7.0 | 2.0 | 1.0 | 6.0 | 16.53 | 3.40 | 8.00 | 10.45 |
| Ex. 2 | 2 | 8.0 | 1.0 | 1.0 | 6.0 | 18.89 | 1.70 | 8.00 | 10.45 |
| Ex. 3 | 3 | 6.0 | 3.0 | 1.0 | 6.0 | 14.17 | 5.10 | 8.00 | 10.45 |
| Ex. 4 | 4 | 7.5 | 1.5 | 1.0 | 6.0 | 17.71 | 2.55 | 8.00 | 10.45 |
| Comp. Ex. 2 | 6 | 9.0 | 1.0 | 0.0 | 6.0 | 21.25 | 1.70 | 0.00 | 10.45 |

### <Evaluation>

### -Diffuse Reflectance Spectrum-

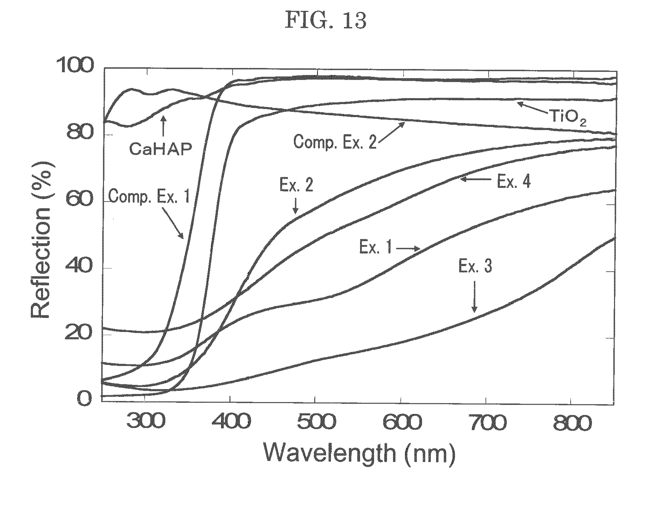

Diffuse reflectance spectra of Samples 1 to 6 obtained in Examples 1 to 4 and Comparative Examples 1 to 2, photocatalyst titanium dioxide (TiO₂, ST-21, manufactured by ISHIHARA SANGYO KAISHA, LTD.), and calcium hydroxyapatite (CaHAP, Ca₁₀(PO₄)₆(OH)₂), PHOTOHAP, manufactured by Taihei Chemical Industrial Co., Ltd.) were measured by a diffused reflection method using a spectrophotometer for ultraviolet and visible region (UV-Vis Spectrophotometer). The results are depicted in FIG. 13.

As clearly seen in FIG. 13, the samples of Examples 1 to 4 exhibited absorption to visible light. It could be confirmed that the absorption of visible light increased, as the concentration of the silver was higher.

On the other hand, CaHAP hardly exhibited absorption to ultraviolet rays, and visible light. The sample of Comparative Example 1, which was not doped with silver, hardly exhibited absorption to visible light. The sample of Comparative Example 2, which was doped with silver, but did not contain titanium, hardly exhibited absorption to ultraviolet rays, and absorption of visible light thereof was also small compared to Examples.

### -Evaluation of Photocatalytic Activities (Decomposition of Methylene Blue) with Visible Light-

Sample 1 (TiAg-CaHAP) obtained in Example 1 and Sample 5 (Ti-CaHAP) obtained in Comparative Example 1 were subjected to the evaluation of photocatalytic activities (decomposition of methylene blue).

First, powder of each sample was weighted in a dish having a diameter of 75 mm so that a surface area thereof based upon a result of specific surface area measurement was to be 105 m². Next, 30 mL of a 0.001 mmol/L methylene blue aqueous solution was added to the dish. Under dark conditions, the resultant was left to stand for 1 hour to sufficiently adsorb the methylene blue on the sample. Thereafter, the methylene blue aqueous solution was removed. Then, 30 mL of a fresh 0.001 mmol/L methylene blue aqueous solution was added to the dish.

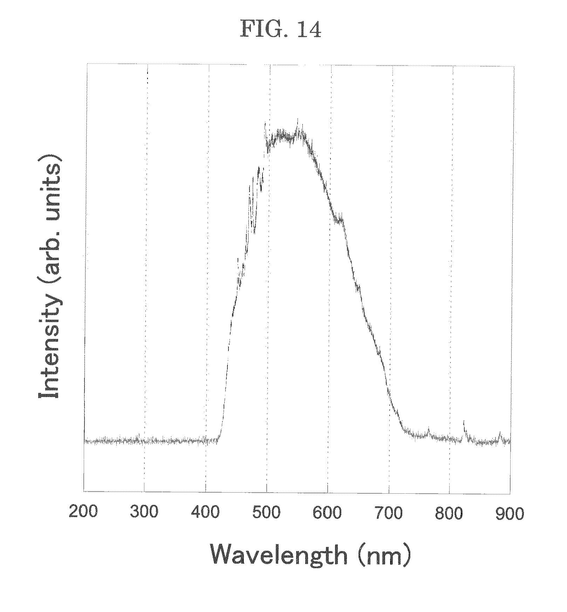

Thereafter, a xenon lamp (LA-251Xe, manufactured by HAYASHI WATCH-WORKS, 150 W, spectrum diagram thereof is depicted in FIG. 14), from light of which light having a wavelength of 420 nm or shorter was cut by a band pass filer (L-42, manufactured by AGC TECHNO GLASS CO., LTD.), was set in a position that was 20 cm upwards from the dish, and light was applied to the dish by the xenon lamp for 6 hours. Note that, the illuminance during light exposure was 35,000 lux on a liquid surface of the methylene blue aqueous solution.

After the light exposure, the concentration of the methylene blue aqueous solution using each sample of Example 1 and Comparative Example 1 was measured by means of the UV-VIS spectrometer. As a result, the absorbance of the methylene blue aqueous solution using the sample of Comparative Example 1 was 42%, whereas the absorbance of the methylene blue aqueous solution using the sample of Example 1 was 8%.

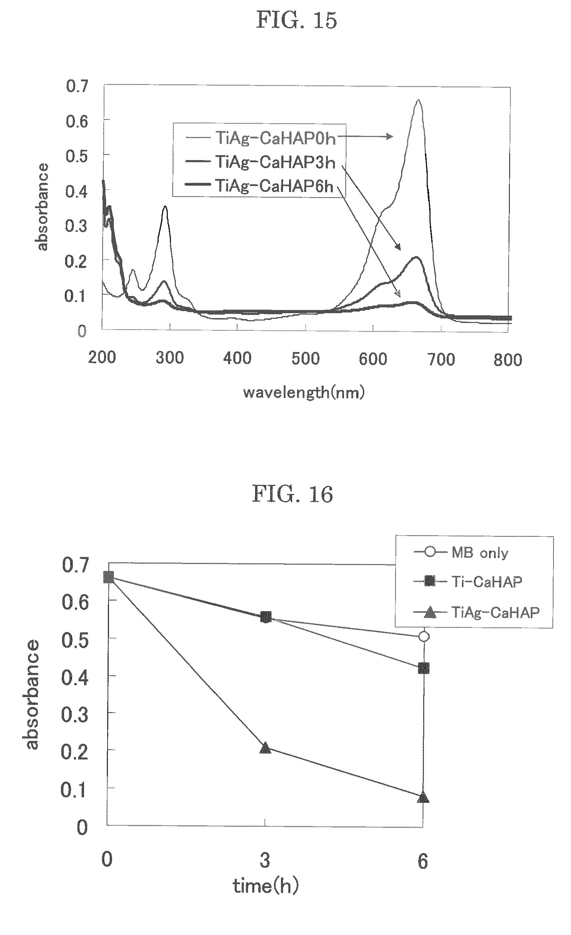

FIG. 15 depicts a change in absorbance of the methylene blue aqueous solution with time, when decomposition of methylene blue is evaluated using Sample 1 of Example 1. In FIG. 15, "TiAg-CaHAP0h" is absorbance of the methylene blue aqueous solution before light exposure, "TiAg-CaHAP3h" is absorbance of the methylene blue aqueous solution after 3 hours of light exposure, and "TiAg-CaHAP6h" is absorbance of the methylene blue aqueous solution after 6 hours of light exposure.

As clearly seen in FIG. 15, it could be confirmed that methylene blue was decomposed by visible light exposure when the sample of Example 1 was used.

Moreover, FIG. 16 depicts a change in absorbance of the methylene blue aqueous solution with time when decomposition of methylene blue was evaluated on Sample 1 of Example 1, Sample 5 of Comparative Example 1, and a blank sample. In FIG. 16, "MB only" means that a sample is not added to the methylene blue aqueous solution, i.e., a blank sample, "Ti-CaHAP" means that the sample of Comparative Example 1 is used, and "TiAg-CaHAP" means that the sample of Example 1 is used.

When the sample of Comparative Example 1 was used, similarly to the case when the blank sample was used, methylene blue was hardly decomposed. On the other hand, it could be confirmed that methylene blue was decomposed with time when the sample of Example 1 was used.

### -Evaluation of Photocatalytic Activities (Decomposition of Acetaldehyde Gas) with Visible Light-

Sample 1 (TiAg-CaHAP) obtained in Example 1 and Sample 5 (Ti-CaHAP) obtained in Comparative Example 1 were subjected to the evaluation of photocatalytic activities (decomposition of acetaldehyde gas).

First, powder of each sample was weighted so that a surface area thereof based upon a result of specific surface area measurement was to be 105 m². Then, the weighted sample was uniformly placed on a bottom surface of a container (volume: 500 cm³) formed of quartz glass with a lid, and an inner atmosphere of the container was replaced with synthetic air (20% by volume of oxygen-80% by volume of nitrogen).

Next, acetaldehyde was injected inside the container so that the concentration of the acetaldehyde gas was to be 1% by volume, and the resultant was left to stand for 1 hour in the dark until the acetaldehyde gas reached adsorption equilibrium with the sample powder.

Thereafter, the below-described predetermined light exposure was started (after 1 hour from the standstill in the dark), and the gas inside the container was taken out by a syringe 1 hour later from the start of the light exposure (after 2 hours from the standstill in the dark), 2 hours later (after 3 hours from the standstill in the dark), and 3 hours later (after 4 hours from the standstill in the dark). Concentrations of the acetaldehyde gas and CO₂ gas were measured by means of a gas chromatography (GC-390B, manufactured by GL Sciences Inc.).

### [Light] (UV-Cut)

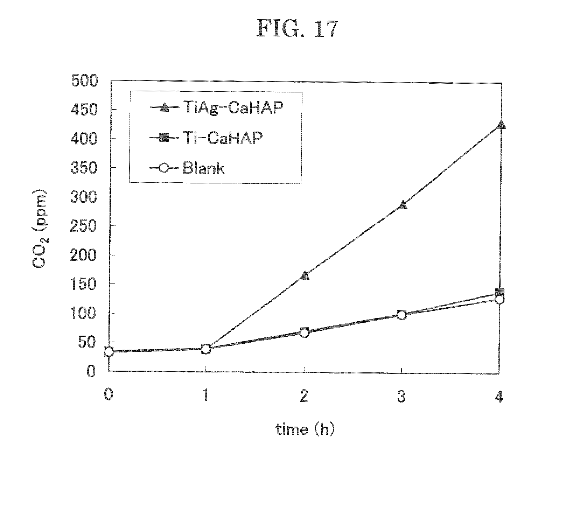

As for light, light applied from a xenon lamp (LA-251Xe, manufactured by HAYASHI WATCH-WORKS, 150 W, the spectrum diagram thereof is depicted in FIG. 14), from which light having a wavelength of 420 nm or shorter had been cut by a band pass filter (L-42, manufactured by AGC TECHNO GLASS CO., LTD.), as used The change in the concentration of CO₂ is depicted in FIG. 17.

In FIG. 17, "Blank" is a result of the (blank) test, in which no sample was added inside the container, "Ti-CaHAP" is a test result of Comparative Example 1, and "TiAg-CaHAP" is a result using the sample of Example 1.

When the sample of Example 1 was used, generation of CO₂ was confirmed from the starting of the light exposure, and the concentration thereof increased with time. When the sample of Comparative Example 1 was used, on the other hand, the result was almost the same as the result of the blank test.

### (Example 5)

### <Preparation of Ag-Doped Strontium·Titanium Hydroxyapatite (Sample 7)>

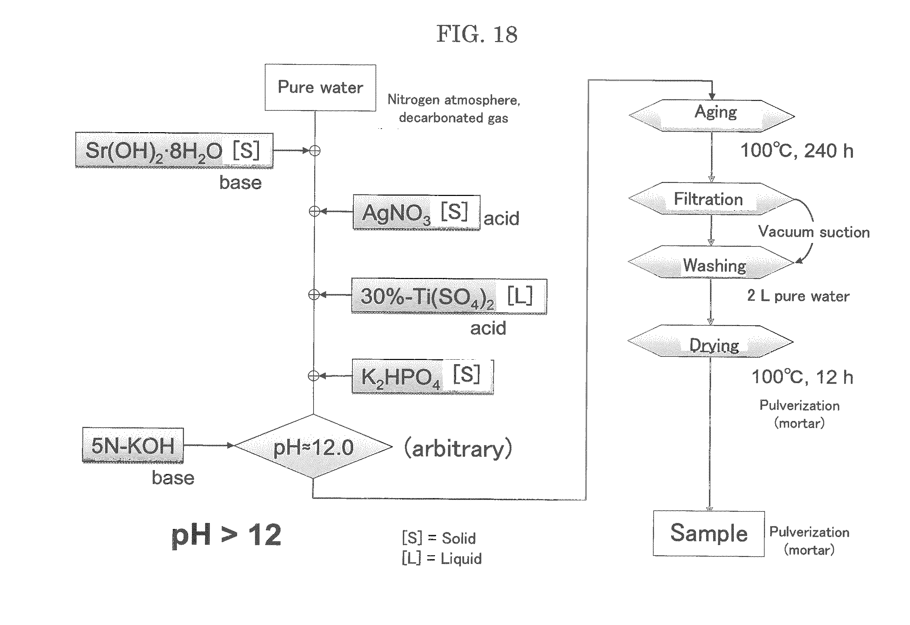

In accordance with the synthesis scheme depicted in FIG. 18, Ag-doped strontium·titanium hydroxyapatite (TiAg-SrHAP) was prepared.

First, 1 L of pure water, which had been subjected to a decarbonation treatment, was prepared. The pure water was mixed with 18.60 g of strontium hydroxide (Sr(OH)₂·8H₂O), 3.40 g of AgNO₃, and 8.00 g of a 30%-Ti(SO₄)₂ aqueous solution in nitrogen atmosphere, and the resulting mixture was stirred.

Subsequently, 10.45 g of K₂HPO₄ was added to the obtained mixture, to thereby obtain a suspension liquid. The pH of the suspension liquid was about 12.

Subsequently, the obtained suspension liquid was aged for 240 hours at 100°C, followed by filtering the suspension liquid, in which precipitation had been caused, through vacuum filtration. The separated sediments were washed with 2 L of pure water, and then dried for 12 hours in a dry oven of 100°C. Thereafter, the resultant was pulverized by a mortar, to thereby obtain Ag-doped strontium·titanium hydroxyapatite (Sample 7).

In Sample 7, an amount of the silver was 20 mol% relative to a total amount of the silver, titanium, and strontium. Moreover, a molar ratio (Ti:Ag) of the titanium (Ti) to the silver (Ag) was 1:2.

### (Example 6)

Ag-doped strontium·titanium hydroxyapatite (Sample 8) was obtained in the same manner as in Example 5, provided that a combination of the raw materials was changed as depicted in Table 2.

In Sample 8, an amount of the silver was 10 mol% relative to a total amount of the silver, titanium, and strontium. Moreover, a molar ratio (Ti:Ag) of the titanium (Ti) to the silver (Ag) was 1:1.

### (Example 7)

Ag-doped strontium-titanium hydroxyapatite (Sample 9) was obtained in the same manner as in Example 5, provided that a combination of the raw materials was changed as depicted in Table 2.

In Sample 9, an amount of the silver was 30 mol% relative to a total amount of the silver, titanium, and strontium. Moreover, a molar ratio (Ti:Ag) of the titanium (Ti) to the silver (Ag) was 1:3.

### (Example 8)

Ag-doped strontium-titanium hydroxyapatite (Sample 10) was obtained in the same manner as in Example 5, provided that a combination of the raw materials was changed as depicted in Table 2.

In Sample 10, an amount of the silver was 15 mol% relative to a total amount of the silver, titanium, and strontium. Moreover, a molar ratio (Ti:Ag) of the titanium (Ti) to the silver (Ag) was 2:3.

### (Example 9)

Ag-doped strontium·titanium hydroxyapatite (Sample 11) was obtained in the same manner as in Example 5, provided that a combination of the raw materials was changed as depicted in Table 2.

In Sample 11, an amount of the silver was 0 mol% relative to a total amount of the silver, titanium, and strontium.

### (Reference Example 1)

Strontium·titanium hydroxyapatite (Sample 12) was obtained in the same manner as in Example 5, provided that a combination of the raw materials was changed as depicted in Table 2.

In Sample 12, a combined amount of the silver and the titanium was 0 mol% relative to a total amount of the silver, titanium, and strontium.

**Table 2**

| | Sample | Target composition (molar ratio) | | | | Blended amount (g) | | | |
|---|---|---|---|---|---|---|---|---|---|
| | | Sr | Ag | Ti | P | Sr(OH)₂· 8H₂O | AgNOs | 30%-Ti(SO₄)₂ | K₂HPO₄ |
| Ex. 9 | 11 | 9.0 | 0.0 | 1.0 | 6.0 | 23.92 | 0.00 | 8.00 | 10.45 |
| Ex. 5 | 7 | 7.0 | 2.0 | 1.0 | 6.0 | 18.60 | 3.40 | 8.00 | 10.45 |
| Ex. 6 | 8 | 8.0 | 1.0 | 1.0 | 6.0 | 21.26 | 1.70 | 8.00 | 10.45 |
| Ex. 7 | 9 | 6.0 | 3.0 | 1.0 | 6.0 | 15.95 | 5.10 | 8.00 | 10.45 |
| Ex. 8 | 10 | 7.5 | 1.5 | 1.0 | 6.0 | 19.93 | 2.55 | 8.00 | 10.45 |
| Ref. Ex. 1 | 12 | 10.0 | 0.0 | 0.0 | 6.0 | 26.57 | 0.00 | 0.00 | 10.45 |

### <Evaluation>

### -Diffuse Reflectance Spectrum-

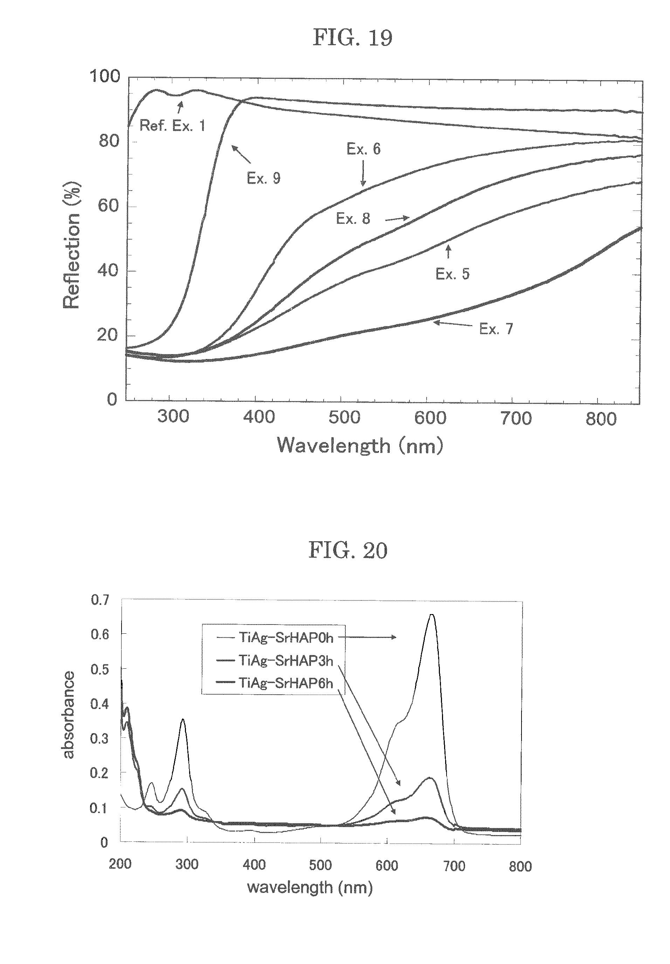

Diffuse reflectance spectra of Samples 7 to 12 obtained in Examples 5 to 9 and Reference Example 1 were measured by a diffused reflection method using a spectrophotometer for ultraviolet and visible region (UV-Vis Spectrophotometer). The results are depicted in FIG. 19.

As clearly seen in FIG. 19, the samples of Examples 5 to 8 exhibited absorption to visible light. It could be confirmed that the absorption of visible light increased, as the concentration of the silver was higher.

### -Evaluation of Photocatalytic Activities (Decomposition of Methylene Blue) with Visible Light -

The sample (TiAg-SrHAP) obtained in Example 5, and the sample (Ti-SrHAP) obtained in Example 9 were subjected to the evaluation of the photocatalytic activities (decomposition of methylene blue) with visible light in the same manner as in Example 1.

After the light exposure, the concentration of the methylene blue aqueous solution using each sample of Example 5 and Example 9 was measured by means of the UV-VIS spectrometer. As a result, the absorbance of the methylene blue aqueous solution using the sample of Example 9 was 41.2%, whereas absorbance of the methylene blue aqueous solution using the sample of Example 5 was 7.3%.

FIG. 20 depicts a change in absorbance of the methylene blue aqueous solution with time, when decomposition of methylene blue is evaluated using Sample 7 of Example 5. In FIG. 20, "TiAg-SrHAP0h" is absorbance of the methylene blue aqueous solution before light exposure, "TiAg-SrHAP3h" is absorbance of the methylene blue aqueous solution after 3 hours of light exposure, and "TiAg-SrHAP6h" is absorbance of the methylene blue aqueous solution after 6 hours of light exposure.

As clearly seen in FIG. 20, it could be confirmed that methylene blue was decomposed by visible light exposure when the sample of Example 5 was used.

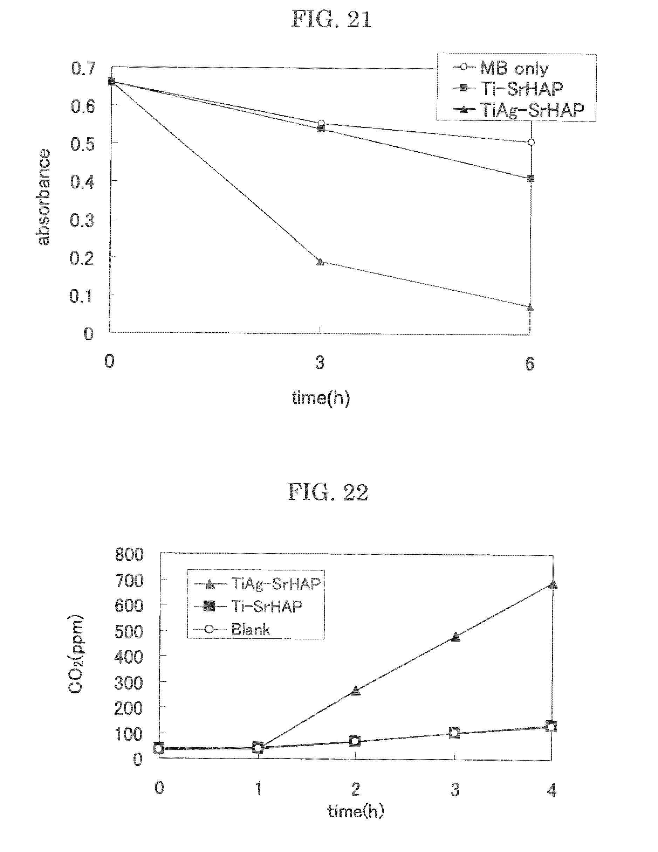

Moreover, FIG. 21 depicts a change in absorbance of the methylene blue aqueous solution with time when decomposition of methylene blue was evaluated on Sample 7 of Example 5, Sample 11 of Example 9, and a blank sample. In FIG. 21, "MB only" means that a sample is not added to the methylene blue aqueous solution, i.e., a blank sample, "Ti-SrHAP" means that Sample 11 of Example 9 was used, and "TiAg-SrHAP" means that Sample 7 of Example 5 was used.

When the sample of Example 5 was used, it could be confirmed that methylene blue was decompose with time compared to the blank sample.

### -Evaluation of Photocatalytic Activities (Decomposition Of Acetaldehyde Gas) with Visible Light-

Sample 7 (TiAg-SrHAP) obtained in Example 5, and Sample 11 (Ti-SrHAP) obtained in Example 9 were subjected to the evaluation of photocatalytic activities (decomposition of acetaldehyde gas) with visible light in the same manner as in Example 1.

The change in the concentration of CO₂ is depicted in FIG. 22.

In FIG. 22, "Blank" is a result of the (blank) test, in which no sample was added inside the container, "Ti-SrHAP" is a result of the test using the sample of Example 9, and "TiAg-SrHAP" is a result of the test using the sample of Example 5.

When the sample of Example 5 was used, a reduction in the concentration of the acetaldehyde gas was greater than the blank test, and the test using the sample of Example 9.

When the sample of Example 5 was used, generation of CO₂ was confirmed from the starting of the light exposure, and the concentration thereof increased with time.

### -XRD (X-Ray Diffraction) Pattern-

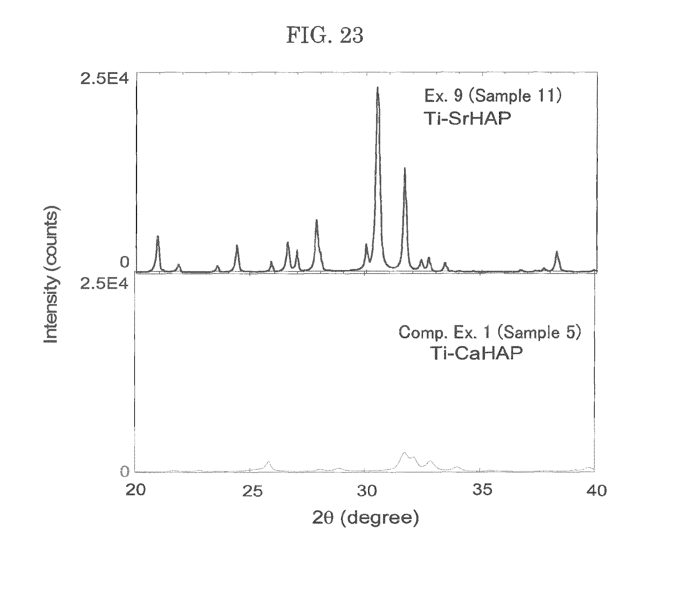

XRD patterns of Sample 11 of Example 9 and Sample 5 of Comparative Example 1 were measured by means of RINT 1500 (manufactured by Rigaku Corporation). The results are depicted in FIG. 23. It could be confirmed from FIG. 23 that Sample 11 (Ti-SrHAP) of Example 9 had the higher crystallinity than that of Sample 5 (Ti-CaHAP) of Comparative Example 1. Note that, in FIG. 23, "E" denotes exponentiation of 10. Specifically, "E4" is 10,000.

### -Evaluation of Photocatalytic Activities (Decomposition of Acetaldehyde Gas) with Ultraviolet Rays-

Sample 11 (Ti-SrHAP) of Example 9 and Sample 5 (Ti-CaHAP) of Comparative Example 1 were subjected to the evaluation of photocatalytic activities (decomposition of acetaldehyde gas) with ultraviolet rays in the same manner as in the evaluation of photocatalytic activities (decomposition of acetaldehyde gas) with visible light, provided that the light source that emitted light was changed to the light below.

### [Light]

As for light, light emitted from a black light (FL-10BL-B, manufactured by Panasonic Corporation, quantity of light: 1 mW/cm²).

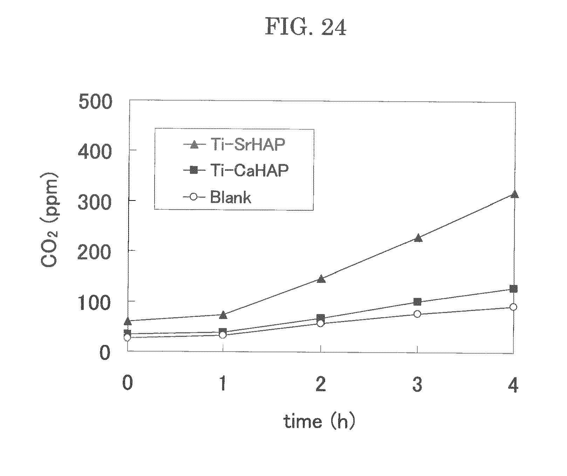

The measurement results of the photocatalytic activities are depicted in FIG. 24. It was confirmed that the photocatalytic activities of Ti-SrHAP were more excellent than the photocatalytic activities of Ti-CaHAP, when ultraviolet rays were applied.

## Claims

1. A photocatalyst, comprising:
X·titanium hydroxyapatite doped with silver, where the X is an alkaline earth metal having an atomic number equal to or higher than that of calcium.

2. The photocatalyst according to claim 1, wherein the X is calcium, or strontium, or both thereof.

3. The photocatalyst according to any of claim 1 or 2, wherein a molar ratio (Ti:Ag) of the titanium (Ti) to the silver (Ag) is 1:1 to 1:3.

4. The photocatalyst according to any one of claims 1 to 3, wherein a total amount of the silver and the titanium is 10 mol% to 50 mol% relative to a total amount of the silver, the titanium, and the X.

5. The photocatalyst according to any one of claims 1 to 4, wherein the silver is introduced into an X(I) site, or an X(II), or both of the X·titanium hydroxyapatite for doping.

6. A photocatalyst, comprising:
calcium·titanium hydroxyapatite, in which at least part of the calcium is substituted with an alkaline earth metal having an atomic number equal to or higher than that of strontium.

7. The photocatalyst according to claim 6, wherein the alkaline earth metal is strontium.

8. The photocatalyst according to claim 6 or 7, wherein an amount of the titanium is 5 mol% to 15 mol% relative to a total amount of the titanium, and all alkaline earth metals in the photocatalyst.

9. A method for producing a photocatalyst, comprising:
carrying out a coprecipitation method to produce the photocatalyst according to any one of claims 1 to 8.
